# EUROPEAN PATENT APPLICATION

(11) **EP 4 604 467 A1**
(43) Date of publication of application: **20.08.2025**
(21) Application number: 22963055.3
(22) Date of filing: 26.10.2022
(51) Int. Cl.: H04L 27/00, H04W 76/10, H04W 4/80, H04W 12/55, H04W 12/68, H04W 12/77, H04W 12/79

(54) **COMMUNICATION METHOD, APPARATUS, AND SYSTEM**

(71) Applicant: Huawei Technologies Co., Ltd., Shenzhen, Guangdong 518129 (CN)
(72) Inventor: WANG, Yong, Shenzhen, Guangdong 518129 (CN); CHEN, Jing, Shenzhen, Guangdong 518129 (CN)
(74) Representative: Isarpatent
(86) International application number: PCT/CN2022/127782
(87) International publication number: WO 2024/087071

(57) **Abstract**

A communication method, apparatus, and system are provided, and relate to the field of communication technologies. The method may include: A first device obtains first information, where the first information indicates that a second device is associated with a third device. The first device obtains second information, where the second information includes shared information used for associating the second device with the third device, the second information is used to establish a first communication connection between the second device and the third device, and the first communication connection corresponds to a first communication technology. The first device sends the second information to the second device and/or the third device, where any one of the first device, the second device, or the third device supports at least one communication technology, and the at least one communication technology includes the first communication technology and/or a second communication technology. The method helps improve communication efficiency, security, and reliability of a system in a communication scenario in which a weak-capability device exists.

## Description

### TECHNICAL FIELD

This application relates to the field of communication technologies, and in particular, to a communication method, apparatus, and system.

### BACKGROUND

With rapid development of informatization, mobile terminals (for example, mobile phones, tablet computers, or other portable intelligent terminals) have become indispensable and important smart tools for individuals. In the mobile internet era, these mobile terminals are more convenient in use than traditional computers (for example, desktop workstations and servers) and are more likely to threaten and damage personal information. Therefore, security of communication technologies is crucial.

With rapid development of emerging industries such as intelligent vehicles, intelligent terminals, smart homes, and smart manufacturing, innovation requirements and applications are constantly emerging. In some communication system scenarios, there are some weak-capability devices, for example, smart bands, smart speakers, headsets, mouse devices, and other devices that do not have a keyboard input capability or a display output capability. In these scenarios, how to improve communication efficiency, security, and reliability of a system is still an urgent important problem that needs to be resolved.

### SUMMARY

This application provides a communication method, apparatus, and system, to help improve communication efficiency, security, and reliability of a system in a communication scenario in which a weak-capability device exists.

According to a first aspect, an embodiment of this application provides a communication method. The method may be implemented by a first device. For example, compared with a second device or a third device, the first device may be a non-capability-limited device, for example, a device having a keyboard input capability or a display output capability, for example, an intelligent terminal (for example, a smartphone, a smart television, or a tablet computer), a notebook computer, or a desktop computer.

The method may include: The first device obtains first information, where the first information indicates that the second device is associated with the third device. The first device obtains second information, where the second information includes shared information used for associating the second device with the third device, the second information is used to establish a first communication connection between the second device and the third device, and the first communication connection corresponds to a first communication technology. The first device sends the second information to the second device and/or the third device, where any one of the first device, the second device, or the third device supports at least one communication technology, and the at least one communication technology includes the first communication technology and/or a second communication technology.

According to the foregoing method, the first device may serve as an intermediate device between the second device and the third device, and may share information between the second device and the third device. The shared information may be associated information that has specific impact on communication efficiency, security, and reliability of communication between the second device and the third device, or even communication efficiency, security, and reliability of an entire communication system to which the second device and the third device belong. In this case, even capabilities of the second device and the third device are limited, a reliable communication connection may still be established or an existing communication manner may be replaced by using a method for sharing information based on the first device, to improve the communication efficiency, security, and reliability of the entire communication system to which the second device and the third device belong.

In an example, the shared information may include a shared key or a token. The shared information may be used to establish the first communication connection between the second device and the third device. The first communication connection corresponds to the first communication technology. The first communication technology may be, for example, a short-range wireless communication technology specified by a SparkLink alliance, and has advantages such as ultra-low latency, ultra-high reliability, and precise synchronization. In comparison with another short-range wireless communication technology (for example, a Bluetooth communication technology), a communication connection that is between the second device and the third device and that uses another communication technology is replaced with the first communication connection, so that the communication efficiency, security, and reliability between the second device and the third device, and even the communication efficiency, security, and reliability of the entire communication system to which the second device and the third device belong can be better ensured.

With reference to the first aspect, in a possible design, that the first device obtains second information includes: The first device obtains the second information by using an information reading technology, where the information reading technology includes any one of the following: an image capturing technology, an optical scanning technology, a radio frequency reading technology, or a magnetic label reading technology.

It should be understood that the method is an example of a method for obtaining the second information by the first device. The method needs to be flexibly selected based on a manner of displaying/obtaining the second information. When the manner of displaying/obtaining the second information changes, steps of the method are correspondingly adjusted. This is not limited in embodiments of this application.

With reference to the first aspect, in a possible design, that the first device obtains second information includes: The first device obtains the second information by using an input apparatus of the first device, where the input apparatus includes at least one of a human machine interaction interface HMI and a voice input apparatus. It should be understood that the method is an example of a method for obtaining the second information by the first device, and the method needs to be flexibly selected based on a manner of displaying the second information. This is not limited in embodiments of this application.

According to the foregoing method, in an optional example, the first device may obtain the second information by using the input apparatus. The method allows a third party (for example, a user or a server) to flexibly configure the shared information for the second device and the third device, to improve the communication efficiency, security, and reliability of the system. The second information input by using the input apparatus may be marked on the second device, for example, may be a character string, and may include a tenant of at least one of the following: numbers, letters, or symbols. Alternatively, the second information input by using the input apparatus may be actively provided by the user or viewed by the user in another manner. This information is not limited in embodiments of this application.

With reference to the first aspect, in a possible design, the second information is marked on the second device.

It should be understood that, in this embodiment of this application, the second information marked on the second device may be directly or indirectly displayed in different manners. For example, the second information may be an image. For example, the second information may be an identification code, such as a barcode or a two-dimensional code. For example, the second information may be a character string, for example, a combination of at least one of a number, a letter, and a symbol. This is not limited in embodiments of this application. Correspondingly, the first device may identify or obtain the second information in different manners based on different manners of displaying the second information. Details are not described herein again. Generally, the second information may be preconfigured on the second device before delivery of the device, or may be obtained in advance and stored in a memory of the second device. In an optional implementation, the second information configured on the second device (or the second information stored in the second device) may be changed after delivery, for example, changed by using an APP. A configuration manner or a change manner of the second information is not limited in embodiments of this application.

With reference to the first aspect, in a possible design, the second device supports the first communication technology but does not support the second communication technology; and the first device supports the second communication technology but does not support the first communication technology.

According to the foregoing method, in an optional example, the first device and the second device may not support a same communication technology, and cannot establish a corresponding communication connection. In this case, the first device may obtain, for example, by using the information reading technology or the input apparatus, the second information marked on the second device. The method may provide an alternative solution for the first device to obtain the second information, so that the intermediate device can implement information sharing between the second device and the third device, thereby improving the communication efficiency, security, and reliability of the communication system to which the second device and the third device belong.

With reference to the first aspect, in a possible design, that the first device obtains second information includes: The first device randomly generates the second information. In an example, the second information may be a random number.

According to the foregoing method, as an example, the first device serves as the intermediate device between the second device and the third device, and may further generate the second information for the second device and the third device, to implement information sharing between the two devices.

With reference to the first aspect, in a possible design, that the first device sends the second information to the second device and/or the third device includes: The first device sends the second information to the second device. When a communication technology supported by the first device and the second device includes the first communication technology, that the first device sends the second information to the second device includes: The first device sends the second information to the second device based on a second communication connection to the second device, where the second communication connection corresponds to the first communication technology. Alternatively, when a communication technology supported by the first device and the second device includes the second communication technology, that the first device sends the second information to the second device includes: The first device sends the second information to the second device based on a third communication connection to the second device, where the third communication connection corresponds to the second communication technology.

According to the foregoing method, a communication connection may be established between the first device and the second device based on a communication technology supported by both the first device and the second device, and information sharing between the second device and the third device is implemented based on assistance of the communication connection, to improve the communication efficiency, security, and reliability of the communication system to which the second device and the third device belong.

With reference to the first aspect, in a possible design, a communication technology supported by the first device and the second device includes the first communication technology, and that the first device obtains second information includes: The first device receives the second information from the second device based on a fourth communication connection to the second device, where the fourth communication connection corresponds to the first communication technology. Alternatively, a communication technology supported by the first device and the second device includes the second communication technology, and that the first device obtains second information includes: The first device receives the second information from the second device based on a fifth communication connection to the second device, where the fifth communication connection corresponds to the second communication technology.

According to the foregoing method, a communication connection may be established between the first device and the second device based on a communication technology supported by both the first device and the second device, and information sharing between the second device and the third device is implemented based on assistance of the communication connection, to improve the communication efficiency, security, and reliability of the communication system to which the second device and the third device belong.

With reference to the first aspect, in a possible design, that the first device sends the second information to the second device and/or the third device includes: The first device sends the second information to the third device. When a communication technology supported by the first device and the third device includes the first communication technology, that the first device sends the second information to the third device includes: The first device sends the second information to the third device based on a sixth communication connection to the third device, where the sixth communication connection corresponds to the first communication technology. Alternatively, when a communication technology supported by the first device and the third device includes the second communication technology, that the first device sends the second information to the third device includes: The first device sends the second information to the third device based on a seventh communication connection to the third device, where the seventh communication connection corresponds to the second communication technology.

According to the foregoing method, a communication connection may be established between the first device and the third device based on a communication technology supported by both the first device and the third device, and information sharing between the second device and the third device is implemented based on assistance of the communication connection, to improve the communication efficiency, security, and reliability of the communication system to which the second device and the third device belong.

With reference to the first aspect, in a possible design, that the first device obtains first information includes: The first device obtains the first information by using an input apparatus of the first device, where the input apparatus includes at least one of an HMI and a voice input apparatus.

According to the foregoing method, the first device serves as the intermediate device between the second device and the third device, and may flexibly associate the second device with the third device by using different input apparatuses. It may be understood that, in this embodiment of this application, an association relationship between the second device and the third device may alternatively be set by default. The association relationship may be notified to the first device by the second device, the third device, or a third-party device (for example, a server) other than the second device and the third device. In other words, the first device may obtain the first information from the second device, the third device, or the third-party device. This is not limited in embodiments of this application.

With reference to the first aspect, in a possible design, the second information includes a shared key (pre-shared key, PSK) or a token. Further, the second device and the third device may establish the first communication connection by using the shared key or the token.

For example, the first communication technology may be a short-range wireless communication technology specified by a SparkLink alliance, and the first communication connection may be a SparkLink basic (SparkLink basic, SLB) connection or a SparkLink low energy (SparkLink low energy, SLE) connection specified by the SparkLink alliance. Specific content of the second information is not limited in embodiments of this application. It should be understood that the description herein is merely an example of the second information, but does not constitute any limitation. When the communication method in this embodiment of this application is applied to another communication field or communication technology, content of the second information may be adjusted based on a scenario change or a service requirement change. Details are not described herein again.

With reference to the first aspect, in a possible design, the second information is plaintext of third information, the third information is an encrypted ciphertext, and that the first device obtains second information includes: The first device obtains the second information in any one of the following manners: decrypting the third information by using a locally stored key, to obtain the second information; receiving a key from a server, and decrypting the third information based on the key, to obtain the second information; or sending the third information to a service, and receiving, from the server, the second information obtained after the third information is decrypted.

According to the foregoing method, to ensure security of the shared information, the shared information of the second device or the third device may be encrypted, and it is set that only a preset device (for example, the first device or a server configured with a decryption algorithm) can decrypt the shared information to obtain plaintext. In this way, the shared information is not randomly stolen. This helps improve communication security.

With reference to the first aspect, in a possible design, the first communication technology includes a SparkLink short-range wireless communication technology; and the second communication technology includes a Bluetooth communication technology.

It should be understood that in some optional embodiments, the second communication technology may be a wired communication technology, or may be another wireless communication technology, for example, a Wi-Fi technology or a near field communication technology. This is not limited in embodiments of this application.

With reference to the first aspect, in a possible design, that the first device sends the second information to the second device and/or the third device includes: The first device sends an identification of the third device and the shared information to the second device; and/or the first device sends an identification of the second device and the shared information to the third device.

According to the foregoing method, the first device serves as the intermediate device between the second device and the third device, and may share identity information of the peer device when sharing information between the second device and the third device, so that the peer device can learn of a device that shares information with the peer device, and the first communication connection is quickly and conveniently established between the two parties.

According to a second aspect, an embodiment of this application provides a communication method. The method may be implemented by a second device. For example, compared with a first device, the second device may be a capability-limited device, and does not have any physical or virtual input apparatus or voice input apparatus, for example, a device that does not have a keyboard input capability or a display output capability, for example, a smart band, a smart speaker, a headset, a mouse, or a keyboard.

The method may include: The second device provides second information for the first device. The second device receives fourth information from a third device, where the fourth information corresponds to the second information, an identification of the second device, and an identification of the third device. The second device establishes a first communication connection to the third device based on the fourth information, where the first communication connection corresponds to a first communication technology, where any one of the first device, the second device, or the third device supports at least one communication technology, and the at least one communication technology includes the first communication technology and/or a second communication technology.

According to the foregoing method, in a communication scenario in which a weak-capability device exists, the second device may serve as a device (which may be a non-capability-limited device or a weak-capability device) that is to establish a link to the weak-capability device, and establish, by providing the second information for the first device and receiving the fourth information from the third device, the first communication connection corresponding to the first communication technology between the second device and the third device. The first communication technology has advantages such as ultra-low latency, ultra-high reliability, and precise synchronization. This helps ensure communication efficiency, security, and reliability of communication between the second device and the third device, and even communication efficiency, security, and reliability of a communication system to which the second device and the third device belong.

In an example, a manner in which the second device provides the second information for the first device may include: The second device may provide a to-be-identified identification code for the first device, so that the first device may obtain the second information in a scanning manner. Alternatively, a manner in which the second device provides the second information for the first device may include: The second device provides the second information displayed in a character string form for the first device, so that a user inputs the second information to the first device in an input manner. A manner in which the second information is provided is not limited in embodiments of this application. For example, the fourth information may be carried in a security context response message, and that the fourth information corresponds to the second information, an identification of the second device, and an identification of the third device may be specifically: The fourth information includes authentication information generated based on the second information from the first device, the identification of the second device, and the identification of the third device. A manner of displaying a correspondence between the fourth information and the second information, the identification of the second device, and the identification of the third device is not limited in embodiments of this application.

With reference to the second aspect, in a possible design, the second information is marked on the second device. The second information supports being identified in any one of the following manners: an image capturing technology, an optical scanning technology, a radio frequency reading technology, or a magnetic label reading technology; or the second information supports being input to the first device by using an input apparatus of the first device, where the input apparatus includes at least one of an HMI and a voice input apparatus.

With reference to the second aspect, in a possible design, the second device supports the first communication technology but does not support the second communication technology; and the first device supports the second communication technology but does not support the first communication technology.

With reference to the second aspect, in a possible design, before that the second device provides second information for the first device, the method further includes: The second device randomly generates the second information.

With reference to the second aspect, in a possible design, that the second device provides second information for the first device includes: The second device sends the second information to the first device based on a second communication connection to the first device, where the second communication connection corresponds to the first communication technology. Alternatively, the second device sends the second information to the first device based on a third communication connection to the first device, where the third communication connection corresponds to the second communication technology.

With reference to the second aspect, in a possible design, the second information includes a shared key PSK or a token.

With reference to the second aspect, in a possible design, the second information further includes identity information of the second device.

With reference to the second aspect, in a possible design, the first communication technology includes a SparkLink short-range wireless communication technology; and the second communication technology includes a Bluetooth communication technology.

According to a third aspect, an embodiment of this application provides a communication method. The method may be implemented by a third device. For example, compared with a first device, the third device may be a capability-limited device, and does not have any physical or virtual input apparatus or voice input apparatus, for example, a device that does not have a keyboard input capability or a display output capability, for example, a smart band, a smart speaker, a headset, a mouse, or a keyboard.

The method may include: The third device receives, from the first device, second information from a second device. The third device establishes a first communication connection to the second device based on the second information, where the first communication connection corresponds to a first communication technology, any one of the first device, the second device, or the third device supports at least one communication technology, and the at least one communication technology includes the first communication technology and/or a second communication technology.

According to the foregoing method, in a communication scenario in which a weak-capability device exists, the third device may serve as a weak-capability device, and receive the second information from the second device. The second information may be configured by the first device for the second device and the third device, or may be forwarded from the second device. Further, the third device may establish the first communication connection to the second device based on the received second information. The first communication connection corresponds to the first communication technology that has advantages such as ultra-low latency, ultra-high reliability, and precise synchronization. This helps ensure communication efficiency, security, and reliability of communication between the second device and the third device, and even communication efficiency, security, and reliability of a communication system to which the second device and the third device belong.

With reference to the third aspect, in a possible design, the second information is marked on the second device. The second information supports being identified in any one of the following manners: an image capturing technology, an optical scanning technology, a radio frequency reading technology, or a magnetic label reading technology; or the second information supports being input to the first device by using an input apparatus of the first device, where the input apparatus includes at least one of an HMI and a voice input apparatus.

With reference to the third aspect, in a possible design, a communication technology supported by the third device and the first device includes the first communication technology, and that the third device receives, from the first device, second information from a second device includes: The third device receives, from the first device based on a sixth communication connection to the first device, the second information from the second device, where the sixth communication connection corresponds to the first communication technology. Alternatively, a communication technology supported by the third device and the first device includes the second communication technology, and that the third device receives, from the first device, second information from a second device includes: The third device receives, from the first device based on a seventh communication connection to the first device, the second information from the second device, where the seventh communication connection corresponds to the second communication technology.

With reference to the third aspect, in a possible design, the second information includes a shared key PSK or a token.

With reference to the third aspect, in a possible design, the method further includes: The third device receives, from the first device, an identification of the second device. It should be understood that, in this embodiment of this application, the second information and the identification of the second device may be carried in same information. The second information and the identification of the second device correspond to each other, and may be jointly used for establishing the first communication connection between the third device and the second device.

With reference to the third aspect, in a possible design, the first communication technology includes a SparkLink short-range wireless communication technology; and the second communication technology includes a Bluetooth communication technology.

According to a fourth aspect, an embodiment of this application provides a communication apparatus, used in a first device. The apparatus includes: an obtaining unit, configured to: obtain first information, where the first information indicates that a second device is associated with a third device, and obtain second information, where the second information includes shared information used for associating the second device with the third device, the second information is used to establish a first communication connection between the second device and the third device, and the first communication connection corresponds to a first communication technology; and a transceiver unit, configured to send the second information to the second device and/or the third device, where any one of the first device, the second device, or the third device supports at least one communication technology, and the at least one communication technology includes the first communication technology and/or a second communication technology.

With reference to the fourth aspect, in a possible design, the first device obtains the second information by using an information reading technology, where the information reading technology includes any one of the following: an image capturing technology, an optical scanning technology, a radio frequency reading technology, or a magnetic label reading technology.

With reference to the fourth aspect, in a possible design, the obtaining unit is specifically configured to obtain, by the first device, the second information by using an input apparatus of the first device, where the input apparatus includes at least one of a human machine interaction interface HMI and a voice input apparatus.

With reference to the fourth aspect, in a possible design, the second information is marked on the second device.

With reference to the fourth aspect, in a possible design, the second device supports the first communication technology but does not support the second communication technology; and the first device supports the second communication technology but does not support the first communication technology.

With reference to the fourth aspect, in a possible design, the obtaining unit is specifically configured to randomly generate the second information.

With reference to the fourth aspect, in a possible design, that the transceiver unit is configured to send the second information to the second device and/or the third device includes: The transceiver unit sends the second information to the second device. When a communication technology supported by the first device and the second device includes the first communication technology, the transceiver unit is specifically configured to send the second information to the second device based on a second communication connection to the second device, where the second communication connection corresponds to the first communication technology. Alternatively, when a communication technology supported by the first device and the second device includes the second communication technology, the transceiver unit is specifically configured to send the second information to the second device based on a third communication connection to the second device, where the third communication connection corresponds to the second communication technology.

With reference to the fourth aspect, in a possible design, a communication technology supported by the first device and the second device includes the first communication technology, and the obtaining unit is specifically configured to receive, by using the transceiver unit based on a fourth communication connection to the second device, the second information from the second device, where the fourth communication connection corresponds to the first communication technology. Alternatively, a communication technology supported by the first device and the second device includes the second communication technology, and the obtaining unit is specifically configured to receive, by using the transceiver unit based on a fifth communication connection to the second device, the second information from the second device, where the fifth communication connection corresponds to the second communication technology.

With reference to the fourth aspect, in a possible design, that the transceiver unit is configured to send the second information to the second device and/or the third device includes: The transceiver unit is configured to send the second information to the third device. When a communication technology supported by the first device and the third device includes the first communication technology, the transceiver unit is specifically configured to send the second information to the third device based on a sixth communication connection to the third device, where the sixth communication connection corresponds to the first communication technology. Alternatively, when a communication technology supported by the first device and the third device includes the second communication technology, the transceiver unit is specifically configured to send the second information to the third device based on a seventh communication connection to the third device, where the seventh communication connection corresponds to the second communication technology.

With reference to the fourth aspect, in a possible design, the obtaining unit is specifically configured to obtain the first information by using an input apparatus of the first device, where the input apparatus includes at least one of an HMI and a voice input apparatus.

With reference to the fourth aspect, in a possible design, the second information includes a shared key PSK or a token.

With reference to the fourth aspect, in a possible design, the second information is plaintext of third information, the third information is an encrypted ciphertext, and the obtaining unit is specifically configured to: obtain the second information in any one of the following manners: decrypting the third information by using a locally stored key, to obtain the second information; receiving a key from a server, and decrypting the third information based on the key, to obtain the second information; or sending the third information to a service, and receiving, from the server, the second information obtained after the third information is decrypted.

With reference to the fourth aspect, in a possible design, the first communication technology includes a SparkLink short-range wireless communication technology; and the second communication technology includes a Bluetooth communication technology.

With reference to the fourth aspect, in a possible design, that the first device sends the second information to the second device and/or the third device includes: The first device sends an identification of the third device and the shared information to the second device; and/or the first device sends an identification of the second device and the shared information to the third device.

According to a fifth aspect, an embodiment of this application provides a communication apparatus, including: a providing unit, configured to provide second information for a first device; and a communication unit, configured to: receive fourth information from a third device, where the fourth information corresponds to the second information, an identification of the second device, and an identification of the third device, and establish a first communication connection to the third device based on the fourth information, where the first communication connection corresponds to a first communication technology, any one of the first device, the second device, or the third device supports at least one communication technology, and the at least one communication technology includes the first communication technology and/or a second communication technology.

With reference to the fifth aspect, in a possible design, the second information is marked on the second device. The second information supports being identified in any one of the following manners: an image capturing technology, an optical scanning technology, a radio frequency reading technology, or a magnetic label reading technology; or the second information supports being input to the first device by using an input apparatus of the first device, where the input apparatus includes at least one of an HMI and a voice input apparatus.

With reference to the fifth aspect, in a possible design, the second device supports the first communication technology but does not support the second communication technology; and the first device supports the second communication technology but does not support the first communication technology.

With reference to the fifth aspect, in a possible design, before providing the second information for the first device, the providing unit is further configured to randomly generate the second information.

With reference to the fifth aspect, in a possible design, the providing unit is specifically configured to: send the second information to the first device based on a second communication connection to the first device, where the second communication connection corresponds to the first communication technology; or send the second information to the first device based on a third communication connection to the first device, where the third communication connection corresponds to the second communication technology.

With reference to the fifth aspect, in a possible design, the second information includes a shared key PSK or a token.

With reference to the fifth aspect, in a possible design, the second information further includes identity information of the second device.

With reference to the fifth aspect, in a possible design, the first communication technology includes a SparkLink short-range wireless communication technology; and the second communication technology includes a Bluetooth communication technology.

According to a sixth aspect, an embodiment of this application provides a communication apparatus, including: a communication unit, configured to: receive, from a first device, second information from a second device; and establish a first communication connection to the second device based on the second information, where the first communication connection corresponds to a first communication technology, any one of the first device, the second device, or a third device supports at least one communication technology, and the at least one communication technology includes the first communication technology and/or a second communication technology.

With reference to the sixth aspect, in a possible design, the second information is marked on the second device. The second information supports being identified in any one of the following manners: an image capturing technology, an optical scanning technology, a radio frequency reading technology, or a magnetic label reading technology; or the second information supports being input to the first device by using an input apparatus of the first device, where the input apparatus includes at least one of an HMI and a voice input apparatus.

With reference to the sixth aspect, in a possible design, a communication technology supported by the third device and the first device includes the first communication technology, and the communication unit is specifically configured to receive, from the first device based on a sixth communication connection to the first device, the second information from the second device, where the sixth communication connection corresponds to the first communication technology. Alternatively, a communication technology supported by the third device and the first device includes the second communication technology, and the communication unit is specifically configured to receive, from the first device based on a seventh communication connection to the first device, the second information from the second device, where the seventh communication connection corresponds to the second communication technology.

With reference to the sixth aspect, in a possible design, the second information includes a shared key PSK or a token.

With reference to the sixth aspect, in a possible design, the communication unit is further configured to receive, from the first device, an identification of the second device.

With reference to the sixth aspect, in a possible design, the first communication technology includes a SparkLink short-range wireless communication technology; and the second communication technology includes a Bluetooth communication technology.

According to a seventh aspect, an embodiment of this application provides a communication apparatus, including at least one processor and an interface circuit. The interface circuit is configured to provide data or code instructions for the at least one processor. The at least one processor is configured to implement, through a logic circuit or by executing the code instructions, the method according to any one of the first aspect and the possible designs of the first aspect, the method according to any one of the second aspect and the possible designs of the second aspect, or the method according to any one of the third aspect and the possible designs of the third aspect.

According to an eighth aspect, an embodiment of this application provides a communication system, including a communication apparatus configured to implement the method according to any one of the first aspect and the possible designs of the first aspect, a communication apparatus configured to implement the method according to any one of the second aspect and the possible designs of the second aspect, or a communication apparatus configured to implement the method according to any one of the third aspect and the possible designs of the third aspect.

According to a ninth aspect, an embodiment of this application provides a computer-readable storage medium. The computer-readable storage medium stores program code, and when the program code is run on a computer, the computer is enabled to perform the method according to any one of the first aspect and the possible designs of the first aspect; or when the program code is run on a computer, the computer is enabled to perform the method according to any one of the second aspect and the possible designs of the second aspect; or when the program code is run on a computer, the computer is enabled to perform the communication apparatus in the method according to any one of the third aspect and the possible designs of the third aspect.

According to a tenth aspect, an embodiment of this application provides a computer program product. When the computer program product is run on a computer, the computer is enabled to perform the method according to any one of the first aspect and the possible designs of the first aspect, the method according to any one of the second aspect and the possible designs of the second aspect, or the method according to any one of the third aspect and the possible designs of the third aspect.

According to an eleventh aspect, an embodiment of this application provides a terminal device, including a unit configured to implement the method according to any one of the first aspect and the possible designs of the first aspect, a unit configured to implement the method according to any one of the second aspect and the possible designs of the second aspect, or a unit configured to implement the method according to any one of the third aspect and the possible designs of the third aspect. In an example, the terminal device includes but is not limited to: a smart transportation device (for example, a car, a ship, an uncrewed aerial vehicle, a train, or a truck), a smart manufacturing device (for example, a robot, an industrial device, smart logistics, or a smart factory), and an intelligent terminal (for example, a mobile phone, a computer, a tablet computer, a palmtop computer, a desktop computer, a headset, acoustic equipment, a wearable device, or a vehicle-mounted device).

Based on the implementations provided in the foregoing aspects, embodiments of this application may be further combined to provide more implementations.

For technical effects that can be achieved in any possible implementation of any one of the fourth aspect to the eleventh aspect, refer to descriptions of technical effects that can be achieved in any possible implementation of any one of the first aspect to the third aspect. Repeated details are not described.

### BRIEF DESCRIPTION OF DRAWINGS

FIG. 1 is a diagram of a system architecture to which an embodiment of this application is applicable;
FIG. 2 is a schematic flowchart of a communication method according to an embodiment of this application;
FIG. 3 is a diagram of device association according to an embodiment of this application;
FIG. 4 to FIG. 8 are diagrams of communication methods in different cases according to an embodiment of this application;
FIG. 9 is a schematic flowchart of establishing a Bluetooth communication connection between devices according to an embodiment of this application;
FIG. 10 is a schematic flowchart of establishing an SLB connection between devices according to an embodiment of this application;
FIG. 11 is a diagram of a structure of a communication apparatus according to an embodiment of this application;
FIG. 12 is a diagram of a structure of a communication apparatus according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

Embodiments of this application provide a communication method, apparatus, and system, to help improve communication security and reliability of a system in a communication scenario in which a weak-capability device exists. The method and the apparatus are based on a same technical concept. Because problem-resolving principles of the method and the apparatus are similar, mutual reference may be made to implementations of the apparatus and the method. Repeated details are not described. In addition, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

For ease of understanding, the following provides descriptions with reference to accompanying drawings and embodiments.

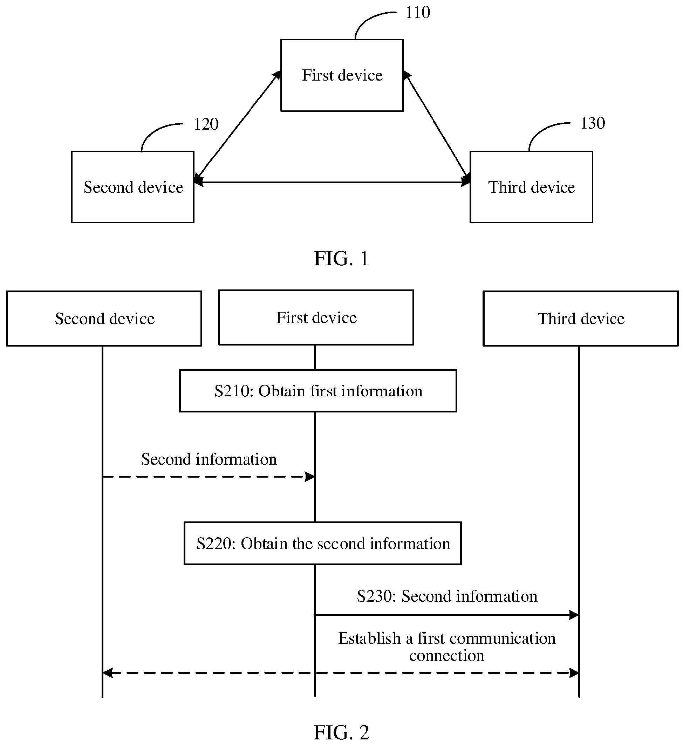

FIG. 1 is a diagram of a system architecture to which an embodiment of this application is applicable.

As shown in FIG. 1, the system architecture may include a first device 110, a second device 120, and a third device 130.

In this embodiment of this application, any one of the first device 110, the second device 120, or the third device 130 may be an electronic device having a data sending and receiving capability.

In an example, the electronic device may be a terminal device, including a device that provides voice and/or data connectivity for a user, and specifically including a device that provides voice for the user, or including a device that provides data connectivity for the user, or including a device that provides voice and data connectivity for the user. For example, a handheld device having a wireless connection function or a processing device connected to a wireless modem is included. For example, the terminal device may communicate with a core network through a radio access network (radio access network, RAN), and exchange voice and/or data with the RAN.

In a specific implementation process, the terminal device may include but is not limited to a vehicle, user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device or a narrowband internet of things (narrowband internet of things, NB-IoT) terminal device, a subscriber unit (subscriber unit), a subscriber station (subscriber station), a mobile station (mobile station), a mobile console (mobile), a remote station (remote station), an access point (access point, AP), a remote terminal (remote terminal) device, an access terminal (access terminal) device, a user terminal (user terminal) device, a user agent (user agent), a user device (user device), or the like. For another example, the terminal device may be specifically implemented as: a mobile phone (or referred to as a "cellular" phone) or a computer having a mobile terminal device; a dedicated IoT terminal device, an industrial control (industrial control) device, a telemedicine (remote medical) device, a smart grid (smart grid) device, or a smart city (smart city) device; a portable, pocket-sized, handheld, computer built-in, or vehicle-mounted mobile apparatus; or a personal communication service (personal communication service, PCS) phone, a cordless phone, a session initiation protocol (Session Initiation Protocol, SIP) phone, a wireless local loop (Wireless Local Loop, WLL) station, or a personal digital assistant (Personal Digital Assistant, PDA). In an optional design, the terminal device may alternatively be implemented as a limited device, for example, a device with low power consumption, a device with a limited storage capability, or a device with a limited computing capability. In an optional design, the terminal device may include components such as a barcode, radio frequency identification (radio frequency identification, RFID), a sensor, a global positioning system (global positioning system, GPS), or a laser scanner.

In an optional design, the terminal device may alternatively be a wearable device. The wearable device may also be referred to as a wearable smart device, a smart wearable device, or the like, and is a general term of wearable devices that are smartly designed and developed for daily wear by using a wearable technology, for example, glasses, gloves, watches, clothes, and shoes. The wearable device is a portable device that is worn on a body directly or integrated into clothes or an accessory of a user. The wearable device is not merely a hardware device, but further can implement powerful functions through software support, data exchange, and cloud interaction. In a broad sense, wearable smart devices include full-featured and large-sized devices that can implement all or some of functions without depending on smartphones, for example, smart watches or smart glasses, and include devices that focus on only one type of application function and need to be used together with other devices such as smartphones, for example, various smart bands, smart helmets, or smart jewelry for monitoring physical signs.

In an optional design, the terminal device may alternatively be a machine smart device like a self-driving (self-driving) device, a transportation safety (transportation safety) device, a virtual reality (virtual reality, VR) terminal device, or an augmented reality (augmented reality, AR) terminal device.

If the various terminal devices described above are located in a vehicle (for example, placed in the vehicle or installed in the vehicle), the terminal devices may be all considered as vehicle-mounted terminal devices. The vehicle-mounted terminal devices may also be referred to as, for example, on-board units (on-board units, OBUs).

In an optional design, the terminal device may further include a relay (relay). Alternatively, it is understood that the terminal device may include any device that can perform data communication with a base station.

In an example, the electronic device may alternatively be a network device, for example, include an access network (access network, AN) device. The access network device may include a device, for example, a base station or an access point, that communicates with a wireless terminal device over an air interface in an access network via one or more cells. The base station may be configured to: mutually convert a received over-the-air frame and an internet protocol (Internet Protocol, IP) packet, and serve as a router between the terminal device and a remaining portion of the access network, where the remaining portion of the access network may include an IP network. In an optional design, the network device may include a base station in a 2^{nd} generation (2^{nd} generation, 2G) communication system, or include a base station in a 3^{rd} generation (3^{rd} generation, 3G) communication system, or include a base station in a 4^{th} generation (4^{th} generation, 4G) communication system, for example, an evolved NodeB (NodeB, eNB, or e-NodeB, evolved NodeB) in a long term evolution (long term evolution, LTE) system or a long term evolution-advanced (long term evolution-advanced, LTE-A) system, or may include a next-generation NodeB (next-generation NodeB, gNB) in a 5^{th} generation (the 5^{th} generation, 5G) new radio (new radio, NR) system (also referred to as an NR system), or may include a central unit (central unit, CU) and a distributed unit (distributed unit, DU) in a cloud access network (cloud radio access network, Cloud RAN) system, and a base station in various future communication systems, for example, a base station in a 6^{th} generation (6^{th} generation, 6G) communication system. This is not limited in embodiments of this application. For another example, the network device may include a network device, namely, a road side unit (road side unit, RSU) in V2X. The RSU may include a fixed infrastructure entity supporting a V2X application, and may exchange a message with another entity supporting the V2X application. For another example, the network device may further include a core network device. The core network device includes, for example, one or more of the following in a 5G system: an access and mobility management function (access and mobility management function, AMF), a session management function (session management function, SMF), and a user plane function (user plane function, UPF), or includes a mobility management entity (mobility management entity, MME) in a 4G system.

In this embodiment of this application, any one of the first device 110, the second device 120, or the third device 130 may support at least one communication technology, the at least one communication technology may include a first communication technology and/or a second communication technology, and the first communication technology is different from the second communication technology.

In an example, in this embodiment of this application, the first communication technology and/or the second communication technology may be a wireless communication technology, for example, a short-range wireless communication technology.

The short-range communication technology may include a technology supporting short-range wireless communication. The short-range wireless communication includes transmission of information between two communication parties through a radio wave within a short range of transmission distance (for example, within a hundred meters), which may all be referred to as short-range wireless communication. The short-range wireless communication includes but is not limited to a Bluetooth (Bluetooth) technology, a wireless fidelity (wireless fidelity, Wi-Fi) technology, a near field communication (near field communication, NFC) technology, a Wi-Fi Aware technology, a universal short-range communication technology, a short-range wireless communication technology specified by a SparkLink alliance, or the like. The short-range communication can be widely used in various aspects such as file transfer, remote control, projection, and sensing of surrounding devices (for example, an intelligent vehicle, an intelligent terminal device, a smart home device, and a smart manufacturing device). The following lists several examples of short-range communication technologies.

Bluetooth is a radio technology that supports short-range communication between devices, and can be used for wireless information exchange between a plurality of devices including a mobile phone, a wireless headset, a notebook computer, and a related peripheral. The "Bluetooth" technology can be used to effectively simplify communication between mobile communication terminal devices, and successfully simplify communication between a device and the internet, so that data is transmitted more rapidly and efficiently, and a path for wireless communication is widened.

The wireless fidelity (wireless fidelity, Wi-Fi) technology is also referred to as a wireless local area network (wireless local area network, WLAN) direct connection or Wi-Fi Direct, and may exist in the Wi-Fi protocol suite that enables devices to easily connect to each other without an intermediary wireless access point. Usage of the wireless fidelity technology ranges from web browsing to file transfer, and the wireless fidelity technology enables a plurality of devices to communicate with each other simultaneously, which can take full advantage of a Wi-Fi speed. Devices that comply with this standard can be easily interconnected even if the devices come from different manufacturers.

The Wi-Fi Aware technology is responsible for sensing and discovery in a Wi-Fi technology, and can help a Wi-Fi device sense a surrounding service, for example, a surrounding device, to implement peer-to-peer (Peer-to-Peer, P2P) message exchange between two devices within a short range by using Wi-Fi Aware. Because Wi-Fi Aware can sense a surrounding device, a plurality of functions may be implemented, for example, sensing a nearby person and establishing a connection, adding a friend, playing a same game, or the like; or discovering a surrounding device and implementing photo sharing or location sharing; or securely sending a file to a printer without accessing a network (for example, a cellular or wireless network).

It should be noted that, in addition to the foregoing listed short-range communication technologies, another existing short-range communication technology, or another short-range communication technology that may appear in the future with evolution of communication technologies may also be applicable to this solution.

It should be noted that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

In addition, unless otherwise specified, ordinal numbers such as "first", "second", and "third" mentioned in embodiments of this application are used to distinguish between a plurality of objects, but are not used to limit priorities or importance degrees of the plurality of objects. For example, a first device, a second device, and a third device are merely used to distinguish between different electronic devices, but do not indicate different priorities, importance degrees, or the like of the three devices. For example, in some embodiments, the second device and the third device may be interchanged.

Based on the system architecture shown in FIG. 1 and a device capability of the second device or the third device, an embodiment of this application provides a communication solution.

For example, in the system shown in FIG. 1, the third device 130 and/or the second device 120 may be a capability-limited device (or referred to as a weak-capability device), and do/does not have any physical or virtual input apparatus or voice input apparatus. In an example, the weak-capability device may be, for example, a device that does not have a physical or virtual keyboard input capability, for example, a smart band, a smart speaker, a headset, or a large television image display with a combined screen. In an example, the weak-capability device may alternatively be a device that does not have a display output capability, for example, a mouse or a keyboard. Compared with the second device 120 or the third device 130, the first device 110 may be a non-limited device. For example, the first device 110 may be an intelligent terminal (for example, a smartphone, a smart television, or a tablet computer), a notebook computer, a desktop computer, or the like, and may have a keyboard input capability or a display output capability.

In this solution, the first device 110 may serve as an intermediate device between the second device 120 and the third device 130, and share information between the second device 120 and the third device 130. The shared information may be key information that has specific impact on communication efficiency, security, and reliability of communication between the second device 120 and the third device 130, or even communication efficiency, security, and reliability of an entire communication system, for example, may be a shared key (pre-shared key, PSK) or a token. In this case, in a communication system to which the second device 120 and the third device 130 belong, a reliable first communication connection may be established between the second device 120 and the third device 130 based on the shared information, to improve communication efficiency, security, and reliability of the system.

In this solution, any one of the first device, the second device, or the third device supports at least one communication technology, the at least one communication technology includes a first communication technology and/or a second communication technology, and the first communication technology and/or the second communication technology may be a wireless communication technology, for example, the short-range wireless communication technology described above. In an example, the first communication technology may include a short-range wireless communication technology specified by a SparkLink alliance (briefly referred to as a SparkLink short-range wireless communication technology), and the second communication technology may include a Bluetooth communication technology. It should be understood that the description herein is merely an example of the first communication technology and/or the second communication technology in embodiments of this application, but does not constitute any limitation. In actual application, the first communication technology and/or the second communication technology may be configured based on a service requirement or an application scenario. Details are not described herein.

FIG. 2 is a schematic flowchart of a communication method according to an embodiment of this application. A first device serves as an intermediate device between a second device and a third device, and may communicatively interact with at least the third device, to implement the communication method in this embodiment of this application. When the first device and the third device serve as communication interaction ends, or when the first device, the second device, and the third device serve as communication interaction ends, the communication method in this embodiment of this application may be collaboratively implemented. As shown in FIG. 2, the method may include the following steps.

S210: The first device obtains first information.

In this embodiment of this application, the first information may indicate that the second device is associated with the third device. The association may be, for example, service association or communication association. A form of association between the second device and the third device is not limited in embodiments of this application.

In some embodiments, the second device and the third device may be produced by a same manufacturer, and an association relationship between the second device and the third device may be configured by default before delivery of the product. During implementation of S210, the first device may obtain the first information from the second device or the third device, to learn of the association relationship between the second device and the third device. In these embodiments, for example, a manner of obtaining the first information may include: The first device receives the first information from the second device or the third device based on a communication connection to the second device or the third device. Alternatively, a manner of obtaining the first information may include: The first information is marked on the second device or the third device, and the first device may obtain the first information according to a preset information reading technology. The information reading technology may include any one of the following: an image capturing technology, an optical scanning technology, a radio frequency reading technology, or a magnetic label reading technology. In these embodiments, the manner of obtaining the first information may be the same as a manner of obtaining second information in the following. For similarities, refer to related descriptions of obtaining the second information by the first device in the following. Details are not described herein.

In some other embodiments, the association relationship between the second device and the third device may be configured or indicated by a third party. For example, as an intermediate device between the second device and the third device, the first device may obtain the first information from a third party other than the second device or the third device.

In an example, the third party may be a user who uses the first device. The first device may include an input apparatus. A user may input the first information to the first device by using the input apparatus. Correspondingly, the first device may obtain the first information by using the input apparatus. The input apparatus may include at least one of a human machine interaction interface (human machine interaction, HMI) and a voice input apparatus. An implementation of the input apparatus is not limited in embodiments of this application. The first information input by the user to the first device by using the input apparatus of the first device may be configured by the user, or may be provided by the second device or the third device. This is not limited in embodiments of this application.

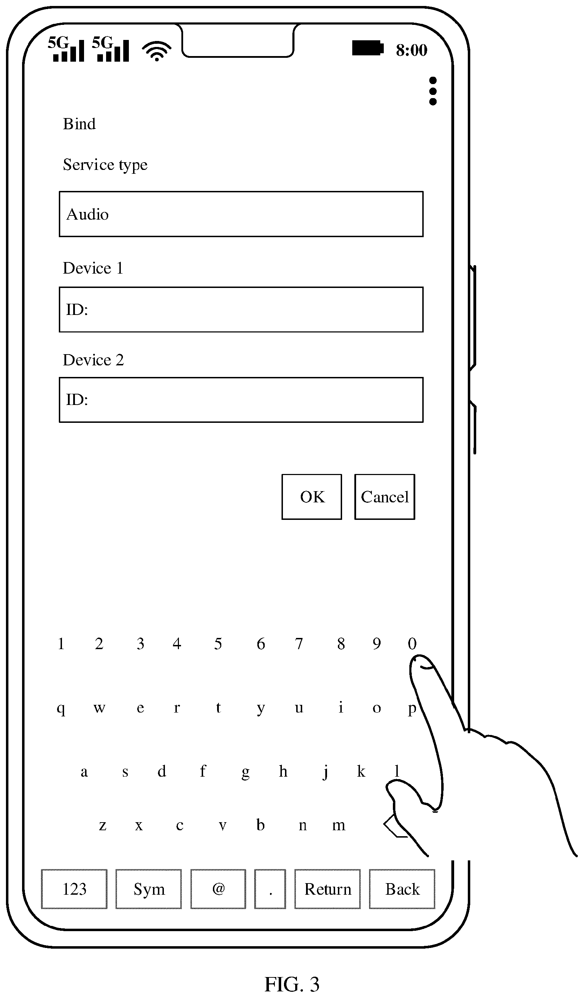

For example, the first device is a smartphone. As shown in FIG. 3, an application (application, APP) used to associate (or referred to as bind) the second device with the third device may be installed and run on the smartphone. An HMI of the smartphone may include a plurality of configuration items (for example, an identification (identification, ID)) that are of the app and that are used for device association, input boxes of different configuration items, and a virtual keyboard (for example, a virtual keyboard in a 26-grid form). The user may select an input box of a specific configuration item on the HMI, and then may input corresponding information in the input box by tapping a combination of at least one of the following: numbers, letters, or symbols on the virtual keyboard, for example, an ID (for example, located on a device 1) of the device 1 (an example of the second device) and an ID (for example, located on a device 2) of the device 2 (an example of the third device). After inputting the information, the user may tap an "OK" button to complete the device association, or tap a "Cancel" button to cancel the device association. Therefore, the first information may include the ID of the bound device 1 and the ID of the bound device 2 that are obtained after the user taps the "OK" button, and indicate that the device 1 is associated with the device 2.

It should be understood that the description herein is merely an example of the association between the second device and the third device implemented by the third party, but does not constitute any limitation. In some embodiments, for example, the input manner based on the virtual keyboard in FIG. 3 may be replaced with an input manner based on a microphone (an example of the voice input apparatus). Alternatively, in some other embodiments, a device binding setting function may be directly woken up by using a microphone of the smartphone, and the user may input information to the smartphone based on the microphone throughout the process, to bind different devices. Alternatively, in some other embodiments, the user may bind different devices by using a preset association action (for example, tap to share or shake to share). Alternatively, in some other embodiments, the third party may not be a user of the first device, but may be a third-party device (for example, a server) that can communicatively interact with the first device. The third-party device may send the first information to the first device based on a communication connection to the first device. Correspondingly, the first device may receive the first information from the third-party device. A manner of obtaining the first information is not limited in embodiments of this application. Details are not described herein again.

It should be noted that, in embodiments of this application, the first information may be explicitly obtained information or may be implicitly obtained information. The explicitly obtained information may be information such as an association identifier or an association action for associating the second device with the third device. The implicitly obtained information may be that information (for example, an ID) of the second device and information (for example, an ID) of the third device are obtained in association, indicating that the second device is associated with the third device. A representation manner of the first information is not limited in embodiments of this application. In embodiments described above, the first information may be explicitly obtained information or implicitly obtained information. Details are not described herein again.

S220: The first device obtains the second information.

S230: The first device sends the second information to the second device and/or the third device.

In this embodiment of this application, the second information may include shared information used for associating the second device with the third device. The shared information may provide support for improving communication efficiency, security, and reliability of communication between the second device and the third device, and even improving communication efficiency, security, and reliability of a communication system to which the second device and the third device belong. For example, a first communication connection may be established between the second device and the third device based on the shared information, and the first communication connection corresponds to a first communication technology. Compared with a second communication technology, the first communication technology may have an advantage such as ultra-low latency, ultra-high reliability, or precise synchronization. Compared with a communication connection based on the second communication technology, the first communication connection can better ensure the communication efficiency, security, and reliability between the second device and the third device or even the communication efficiency, security, and reliability of the communication system to which the second device and the third device belong.

It should be understood that the description in FIG. 2 is merely an example of possible steps included in the communication method in this embodiment of this application and a possible implementation sequence of the steps, but does not constitute any limitation. In some embodiments, the first device may consider by default that the second device has an association relationship with the third device, and does not need to perform S210. In some other embodiments, S210 and S220 may be interchanged in execution sequence, and the first device may first perform S220 and then perform S210. This is not limited in embodiments of this application. In addition, based on different manners of obtaining the second information or different communication technologies respectively supported by the first device, the second device, and the third device, implementation details of the communication method may also be different.

In an example, the second information may be marked on the second device. When S220 is implemented, the first device may obtain the second information according to an information reading technology. The information reading technology may include any one of the following: an image capturing technology, an optical scanning technology, a radio frequency reading technology, or a magnetic label reading technology. Alternatively, the second information may be marked on the second device, and the first device may obtain the second information by using the input apparatus of the first device. The input apparatus may include at least one of the human machine interaction interface HMI and the voice input apparatus. When a communication technology supported by the first device and the third device includes the first communication technology, the first device may send the second information to the third device based on a sixth communication connection to the third device, where the sixth communication connection corresponds to the first communication technology. Alternatively, when a communication technology supported by the first device and the third device includes the second communication technology, the first device may send the second information to the third device based on a seventh communication connection to the third device, where the seventh communication connection corresponds to the second communication technology.

Therefore, when the first device and the second device support different communication technologies, for example, the second device supports the first communication technology but does not support the second communication technology, and the second device supports the second communication technology but does not support the first communication technology, the first device may implement information sharing between the second device and the third device by using the information reading technology, or the input apparatus and the communication technology supported by both the first device and the third device, to help improve the communication efficiency, security, and reliability of the communication system to which the second device and the third device belong.

In another example, the first device may randomly generate the second information, and separately send the generated second information to the second device and the third device. For example, when a communication technology supported by the first device and the second device includes the first communication technology, the first device may send the second information to the second device based on a second communication connection to the second device, where the second communication connection corresponds to the first communication technology. Alternatively, when a communication technology supported by the first device and the second device includes the second communication technology, the first device may send the second information to the second device based on a third communication connection to the second device, where the third communication connection corresponds to the second communication technology. For example, when the communication technology supported by the first device and the third device includes the first communication technology, the first device may send the second information to the third device based on the sixth communication connection to the third device, where the sixth communication connection corresponds to the first communication technology. Alternatively, when the communication technology supported by the first device and the third device includes the second communication technology, the first device may send the second information to the third device based on the seventh communication connection to the third device, where the seventh communication connection corresponds to the second communication technology.

In another example, the first device may receive the second information from the second device based on a communication connection to the second device, and forward the received second information to the third device. For example, for the first device and the second device, when a communication technology supported by the first device and the second device includes the first communication technology, the first device may receive the second information from the second device based on a fourth communication connection to the second device, where the fourth communication connection corresponds to the first communication technology. Alternatively, when a communication technology supported by the first device and the second device includes the second communication technology, the first device may receive the second information from the second device based on a fifth communication connection to the second device, where the fifth communication connection corresponds to the second communication technology. For example, for the first device and the third device, when the communication technology supported by the first device and the third device includes the first communication technology, the first device may send the second information to the third device based on the sixth communication connection to the third device, where the sixth communication connection corresponds to the first communication technology. Alternatively, when the communication technology supported by the first device and the third device includes the second communication technology, the first device may send the second information to the third device based on the seventh communication connection to the third device, where the seventh communication connection corresponds to the second communication technology.

In this embodiment of this application, based on different manners of obtaining the second information and communication technologies respectively supported by the first device, the second device, or the third device, implementation details of S210, S220, and S230 are different in different cases. For ease of understanding, the following describes the communication method in this embodiment of this application based on different cases by using an example in which the first communication technology uses a short-range wireless communication technology specified by a SparkLink alliance, the second communication technology uses a Bluetooth communication technology, and the first device is a smartphone.

Case 1: The second information is marked on the second device. The second device supports the first communication technology but does not support the second communication technology.

Implementation 1: The first device may obtain the second information by using an input apparatus of the first device, where the input apparatus may include at least one of an HMI and a voice input apparatus. The first device may send the second information to the third device based on a communication connection to the third device.

For example, the first device is a smartphone, and the smartphone obtains the second information by using an input apparatus of the smartphone. The second information may be a readable character string marked on the second device, and may include a combination of at least one of the following: numbers, letters, and symbols. As shown in FIG. 3, on an HMI of the smartphone, the user may input an ID of a device 1 (an example of the second device) and a to-be-shared token (not shown in FIG. 3) of the second device by using a virtual keyboard. The user may further input an ID of a device 2 (an example of the third device) by using the virtual keyboard. After the user taps an "OK" button, the association between the second device and the third device is implemented. That is, the smartphone obtains the first information, and the smartphone obtains the second information (for example, including the token) and the ID of the device 1 at the same time.

The smartphone may establish a communication connection to the third device, and send the second information to the third device based on the established communication connection. For example, when a communication technology supported by the smartphone and the third device includes the first communication technology, the first device may send the second information to the third device based on the communication connection (for example, represented as a sixth communication connection) using the first communication technology to the third device. When a communication technology supported by the smartphone and the third device includes the second communication technology, the first device may send the second information to the third device based on the communication connection (for example, represented as a seventh communication connection) using the second communication technology to the third device.

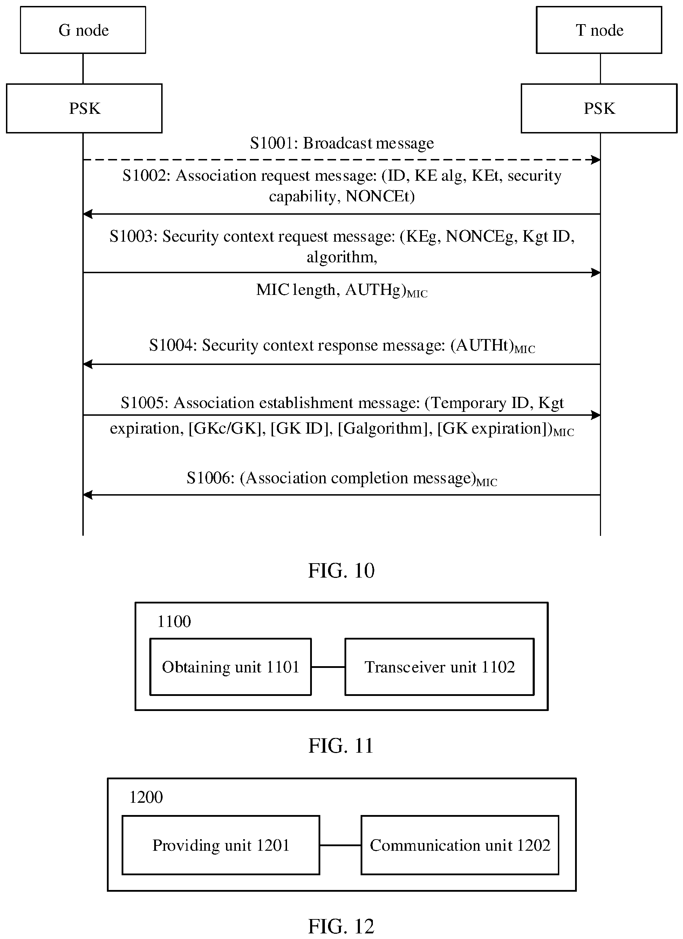

Correspondingly, the third device may receive and store the second information from the first device. If required, the third device may establish a first communication connection to the second device based on the second information. For a process of establishing the first communication connection based on the second information, refer to related descriptions in the following with reference to FIG. 10. Details are not described herein.

Implementation 2: The first device may obtain the second information by using an information reading technology. The information reading technology may include any one of the following: an image capturing technology, an optical scanning technology, a radio frequency reading technology, or a magnetic label reading technology.

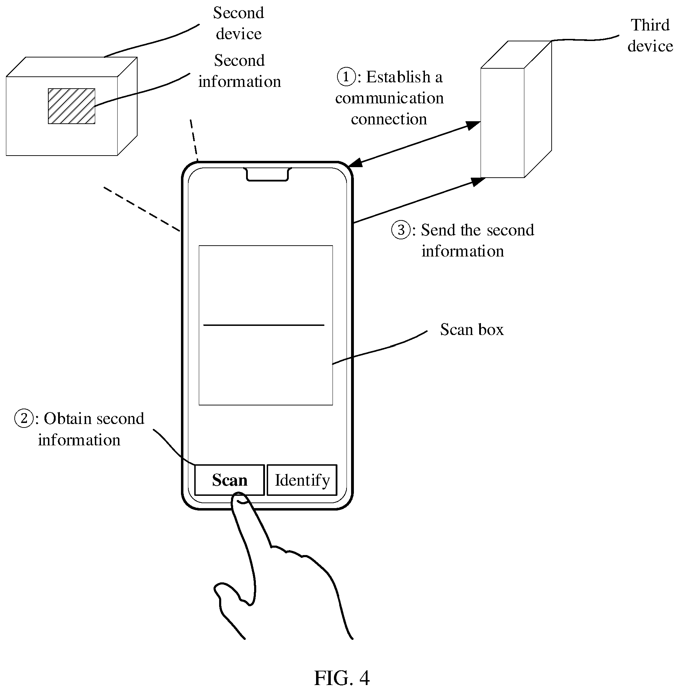

For example, as shown in FIG. 4, different cuboids are used to respectively represent the second device and the third device, and the second information may be an identification code marked on the second device (a filling pattern is merely used as an example, a presentation manner of the identification code is not limited, and the identification code may be a barcode, a two-dimensional code, or the like in actual application). An example in which the information reading technology used by the smartphone serving as the first device is an optical scanning technology is used. The communication method may include the following steps.

Step ①: The smartphone establishes a communication connection to the third device, and the smartphone may manage the third device based on the communication connection to the third device.

The communication connection between the smartphone and the third device may be a communication connection using the first communication technology, and is represented as a sixth communication connection. Alternatively, the communication connection between the smartphone and the third device may be a communication connection using the second communication technology, and is represented as a seventh communication connection.

In an example, that the first device manages the third device may include: The first device configures, for the third device, a device that needs to communicate with the third device based on the first communication technology, for example, the second device. When the management is implemented, an HMI of the smartphone may output a plurality of configuration items used for device association, for example, a "Scan" button and an "Identify" button.

Step ②: The smartphone obtains the second information from the second device in an optical scanning manner.

The second information for sharing may be marked on the second device in a manner of an identification code. On the HMI of the smartphone, the user may tap the "Scan" button to enable an optical scanning function of the smartphone. After the optical scanning function is woken up, display of a scan box on the HMI of the smartphone may be triggered. The user may align a camera of the smartphone with the second information marked on the second device. The smartphone may scan the identification code by using the camera, and identify the identification code by using the scan box, to obtain the second information. For example, the second information may include an identification of the second device and a to-be-shared token or a shared key of the second device. When obtaining the second information, the smartphone may further obtain the identification of the second device and an identification of the third device in association, to implicitly obtain an association relationship between the second device and the third device. That is, the smartphone obtains the first information.

Step ③: The smartphone sends the second information to the third device based on the communication connection to the third device.

When the communication technology supported by the smartphone and the third device includes the first communication technology, the first device may send the second information to the third device based on the sixth communication connection to the third device, where the sixth communication connection corresponds to the first communication technology. When the communication technology supported by the smartphone and the third device includes the second communication technology, the first device may send the second information to the third device based on the seventh communication connection to the third device, where the seventh communication connection corresponds to the second communication technology.

Correspondingly, the third device may receive and store the second information from the first device. If required, the third device may establish a first communication connection to the second device based on the second information. For a process of establishing the first communication connection based on shared information, refer to related descriptions in the following with reference to FIG. 10. Details are not described herein.

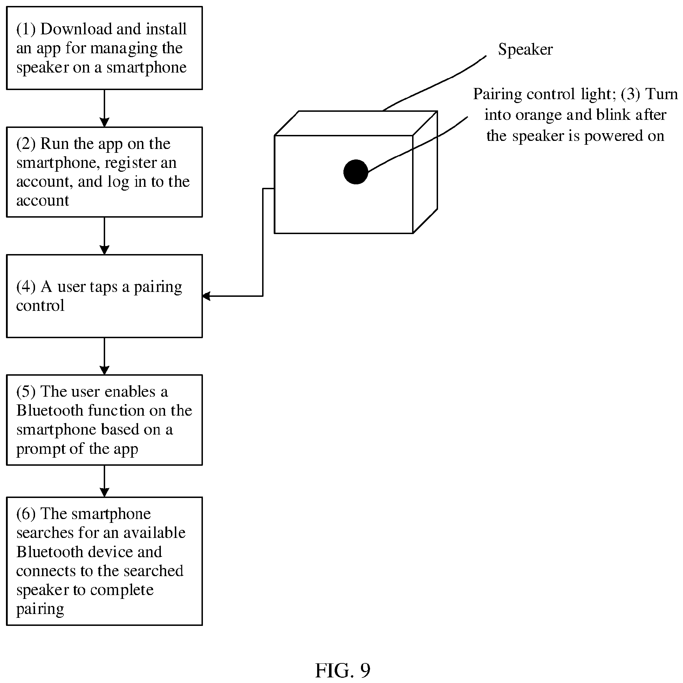

In the foregoing two implementations, details of a method for establishing a corresponding communication connection between the smartphone and the third device or performing communication interaction based on the corresponding communication connection vary according to a communication technology supported by the smartphone and the third device. The following uses an example for description with reference to FIG. 9 or FIG. 10. Details are not described herein.

It should be noted that, in embodiments of this application, the third device and the second device may be similar capability-limited devices. Same as the second device, the third device may also include shared information that is represented as fifth information. The shared information may be input to the first device by using the foregoing implementation 1, or may be identified by the first device by using the foregoing implementation 2. Similar to the second information, the first device may send the obtained fifth information to the second device, to implement information sharing between the second device and the third device. In the following implementation, for related descriptions of obtaining, by the first device, the fifth information from the third device by using the technology in the foregoing implementation 1 or 2 and forwarding the fifth information, refer to related descriptions in the case 1. Details are not distinguished and described one by one in the following.

Case 2: The first device generates the second information, and separately sends the generated second information to the second device and the third device.

In the case 2, the first device may, for example, randomly generate the second information (for example, a token, which may be a random number).

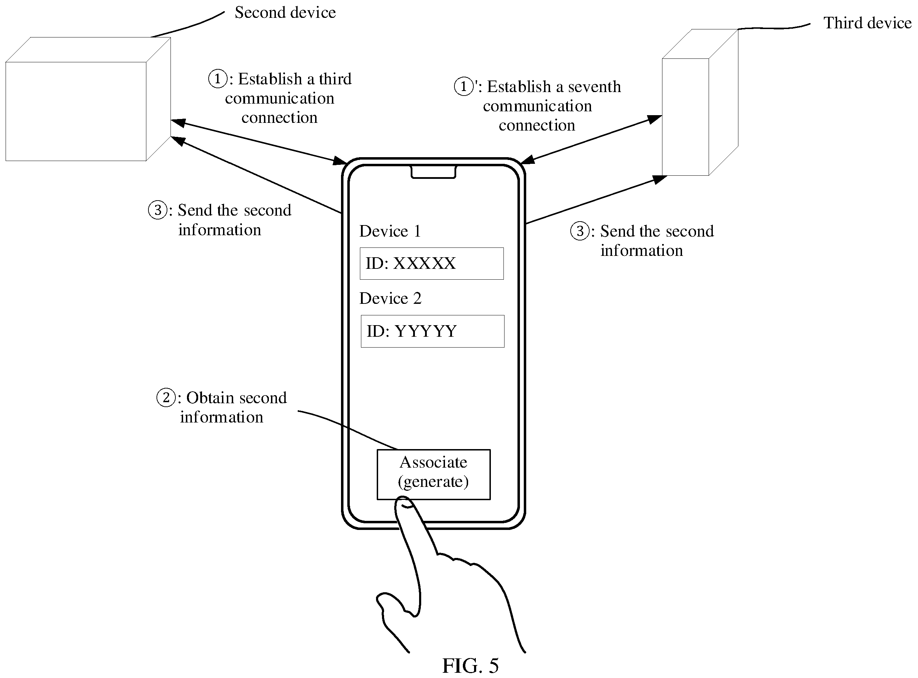

In an example, the second information includes a token (for example, a random number). As shown in FIG. 5, an example in which both the second device and the third device support the first communication technology and the second communication technology is used. When the smartphone serving as the first device supports the second communication technology (for example, a Bluetooth communication technology), the method may include the following steps.

Step : The smartphone establishes a third communication connection to the second device.

Step ①'. The smartphone establishes a seventh communication connection to the third device.

The third communication connection and the seventh communication connection correspond to the second communication technology. For implementation details of the link establishment process, refer to related descriptions in the following with reference to FIG. 9. Details are not described herein.

Step ②: The user associates the second device with the third device on the smartphone, and the second information is generated at the same time, where the second information may include, for example, a to-be-shared token.

The smartphone may exchange information after separately establishing communication connections using the second communication technology to the second device and the third device. For example, the smartphone may receive an ID of the second device or an ID of the third device based on the corresponding communication connection. The ID of the second device and the ID of the third device may be presented on an HMI of the smartphone, for example, an ID of a device 1 (an example of the second device): XXXXX, and an ID of a device 2 (an example of the third device): YYYYY in FIG. 5. The user may tap an "Associate (generate)" button to implement an operation of associating the second device with the third device. In response to the operation, the smartphone may implement association and binding between the second device and the third device, and generate a token (for example, a random number) by using a preset algorithm.

Step ③: The smartphone sends the token (an example of the second information) to the second device based on the third communication connection to the second device, and sends the token (an example of the second information) to the third device based on the seventh communication connection to the third device.

In an optional implementation, the smartphone may further send, for example, the identification of the second device to the third device, to indicate an association relationship between the second device and the third device. Alternatively, the smartphone may further send, for example, the identification of the third device to the second device, to indicate an association relationship between the second device and the third device. Content of information transmitted between the first device and the second device/the third device is not limited in embodiments of this application. In addition, the token and the identification of the second device/the identification of the third device may be carried in same information, and the token and the identification of the second device/the identification of the third device correspond to each other, to establish a first communication connection.

Correspondingly, the second device/third device may receive and store the second information (for example, including the token) and the identification of the third device/the identification of the second device from the smartphone. If required, the second device (or the third device) may establish the first communication connection to the third device (or the second device) based on the second information. For a process of establishing the first communication connection based on shared information, refer to related descriptions in the following with reference to FIG. 10. Details are not described herein.

It should be understood that, in the case 2, the smartphone serving as the first device may also support the first communication technology. Step ① may be replaced with the following: The smartphone establishes a second communication connection to the second device, where the second communication connection corresponds to the first communication technology. Step ①' may be replaced with the following: The smartphone establishes a sixth communication connection to the third device, where the sixth communication connection corresponds to the first communication technology. Step ③ may be replaced with the following: The smartphone sends the second information to the second device based on the second communication connection to the second device, and sends the second information to the third device based on the sixth communication connection to the third device.

In other words, in the case 2, the first device and the second device/the third device may establish a link and perform communication interaction based on a communication technology supported by both the first device and the second device/the third device. This is not limited in embodiments of this application. When the first communication technology is used, the first device may obtain, in a manner similar to the foregoing case 1, a to-be-shared token marked on the second device, and establish the second communication connection to the second device based on the token; or the first device may obtain, in a manner similar to the foregoing case 1, a to-be-shared token located on the third device, and establish the sixth communication connection to the third device based on the token. Details are not described herein again. It should be understood that, in this embodiment of this application, the token marked on the second device may be the same as or different from the token located on the third device. This is not limited in embodiments of this application.

Case 3: The first device receives the second information from the second device based on a communication connection to the second device, and forwards the received second information to the third device.

Implementation 1: A communication technology supported by any one of the first device, the second device, or the third device includes the first communication technology. That is, the first device, the second device, and the third device jointly support the first communication technology.

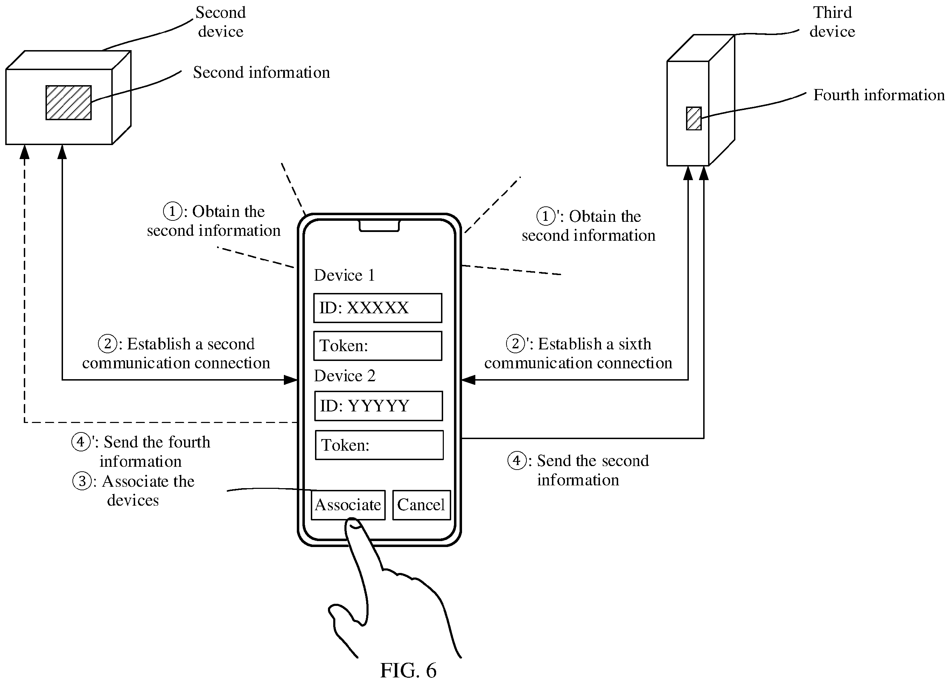

An example in which the second information includes a token is used. As shown in FIG. 6, when a smartphone serves as the first device, the communication method may include the following steps.

Step ①: The smartphone may obtain the second information from the second device by using an information reading technology.

Step ①'. The smartphone may obtain fifth information from the third device by using an information reading technology.

The information reading technology may include any one of the following: an image capturing technology, an optical scanning technology, a radio frequency reading technology, or a magnetic label reading technology. Similar to the implementation 2 in the case 1 described above, the smartphone may identify, by using the used information reading technology, an identification code (for example, a barcode or a two-dimensional code) or a character string that is marked on the second device or the third device, to obtain the second information or the fifth information.

The second information obtained from the second device may include a token of the second device, and may be used by another device (for example, the smartphone or the third device) to establish a communication connection to the second device. The communication connection corresponds to the first communication technology. The fifth information obtained from the third device may include a token of the third device, and may be used by another device (for example, the smartphone or the second device) to establish a communication connection to the third device. The communication connection corresponds to the first communication technology.

It should be understood that, in actual application, step ① or step ①' may be replaced with the manner of the implementation 1 in the foregoing case 1, and the second information and the fifth information are separately obtained by using the input apparatus of the smartphone. For similarities, refer to the foregoing related descriptions. Details are not described herein again.

Step ②: The smartphone establishes a second communication connection to the second device based on the second information obtained from the second device, where the second communication connection corresponds to the first communication technology.

Step ②'. The smartphone establishes a sixth communication connection to the third device based on the fifth information obtained from the third device, where the sixth communication connection corresponds to the first communication technology.

After the smartphone separately establishes a communication connection using the first communication technology to the second device and the third device, related information of the second device and related information of the third device may be presented on an HMI of the smartphone, for example, an ID of a device 1: XXXXX, and a token (or a shared key) of the device 1; and an ID of a device 2: YYYYY, and a token (or a shared key) of the device 2.

Step ③: The user associates the second device with the third device on the smartphone.

The HMI of the smartphone may output an interface and a configuration item that are used for device association, for example, an "Associate" button. The user may tap the "Associate" button on the interface, to implement an operation of associating the second device with the third device. In response to the operation, the smartphone completes association and binding between the second device and the third device.

Step ④: The smartphone may select either the second information or the fifth information to perform information sharing between the second device and the third device.

For example, the smartphone may choose to share the second information between the second device and the third device. In step ④, the smartphone may send the second information to the third device based on the sixth communication connection to the third device. The second information may include, for example, a token of the second device. Correspondingly, the third device may receive and store the second information from the first device. If required, the third device may establish the first communication connection to the second device based on the second information, and the first communication connection corresponds to the first communication technology. In an optional implementation, the smartphone may further send an identifier of the second device to the third device based on the sixth communication connection, to indicate the association relationship between the second device and the third device. In this embodiment of this application, the token and the identification may be indicated by same information, or may be indicated by different information. Content of information exchanged between the smartphone and the third device is not limited in embodiments of this application.

For another example, the smartphone may choose to share the fifth information between the second device and the third device. Step ④ may be replaced with step ④'. In step ④', the smartphone may send the fifth information to the second device based on the second communication connection to the second device. The fifth information may include, for example, a token of the third device. Correspondingly, the second device receives and stores the fourth information from the first device. If required, the second device may establish the first communication connection to the third device based on the fifth information, and the first communication connection corresponds to the first communication technology. In an optional implementation, the smartphone may further send an identifier of the third device to the second device based on the second communication connection. In this embodiment of this application, the token and the identification may be indicated by same information, or may be indicated by different information. Content of information exchanged between the smartphone and the second device is not limited in embodiments of this application.

Implementation 2: A communication technology supported by the first device or the second device includes the first communication technology and the second communication technology, and a communication technology supported by the third device includes the first communication technology.

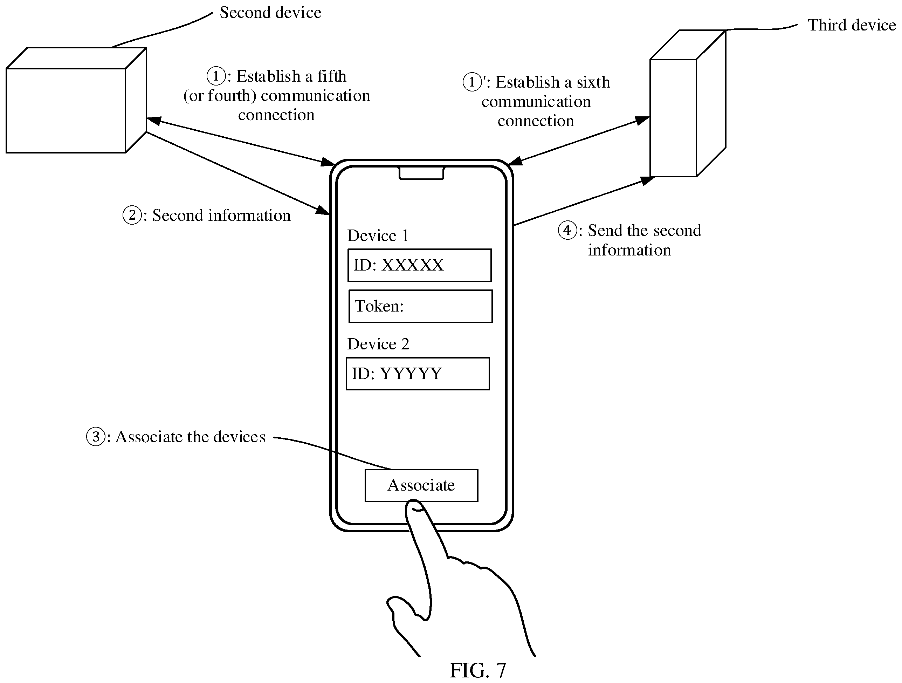

As shown in FIG. 7, when a smartphone serves as the first device, the communication method may include the following steps.

Step ①: The smartphone establishes a fifth (or fourth) communication connection to the second device.

Step ①'. The smartphone establishes a sixth communication connection to the third device.

The fourth communication connection corresponds to the first communication technology, the fifth communication connection corresponds to the second communication technology, and the sixth communication connection corresponds to the first communication technology. For implementation details of a link establishment process in step ① and step ①', refer to related descriptions in the following with reference to FIG. 9 or FIG. 10. Details are not described herein.

Step ②: The smartphone receives the second information from the second device based on the fifth communication connection (or the fourth communication connection) to the second device.

Step ③: The user associates the second device with the third device on the smartphone.

Related information of the second device and related information of the third device may be presented on an HMI of the smartphone, for example, an ID of a device 1 (an example of the second device): XXXXX and the second information (for example, including a token or a shared key); and an ID of a device 2 (an example of the third device): YYYYY. The user may tap an "Associate" button to implement an operation of associating the second device with the third device. In response to the operation, the smartphone may complete association and binding between the second device and the third device. That is, the smartphone obtains the first information.

Step ④: The smartphone sends the second information to the third device based on the sixth communication connection to the third device, where the second information may include, for example, a token or a shared key. Correspondingly, the third device receives and stores the second information from the smartphone. If required, the third device may establish the first communication connection to the second device based on the second information, and the first communication connection corresponds to the first communication technology. In an optional implementation, the smartphone may further send an identifier of the second device to the third device based on the sixth communication connection, to indicate the association relationship between the second device and the third device. Content of information exchanged between the smartphone and the third device is not limited in embodiments of this application.

Implementation 3: A communication technology supported by any one of the first device, the second device, or the third device includes the first communication technology and the second communication technology.

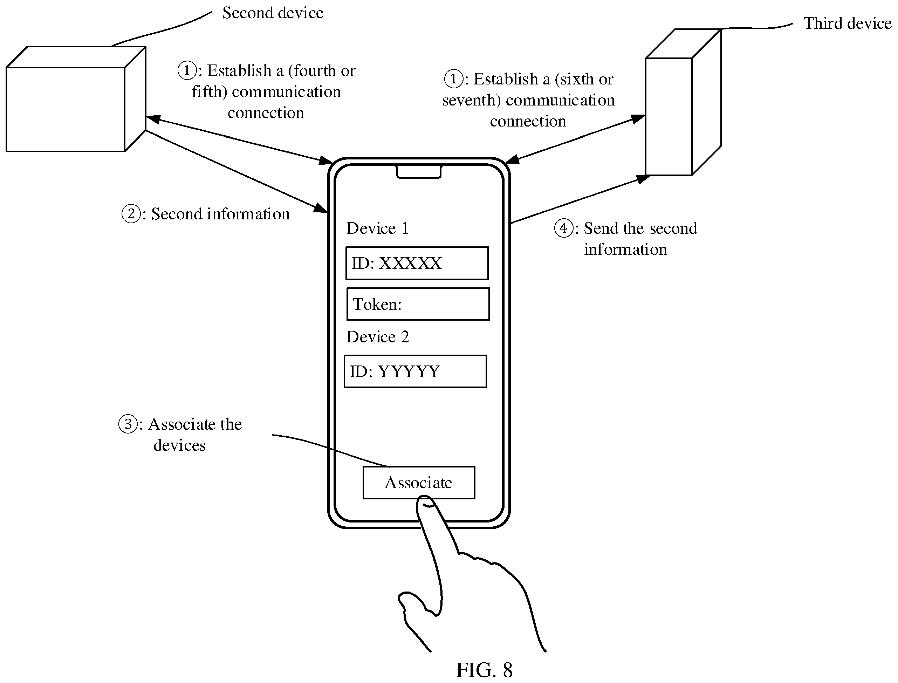

As shown in FIG. 8, in comparison with the method shown in FIG. 7, the third device may further support the second communication technology in the method. Therefore, a difference from the method shown in FIG. 7 lies in that in the method shown in FIG. 8, the smartphone may establish a sixth or seventh communication connection to the third device in step ①', where the sixth communication connection corresponds to the first communication technology, and the seventh communication connection corresponds to the second communication technology. For a link establishment process, refer to related descriptions in the following with reference to FIG. 9 or FIG. 10. Details are not described herein. For steps in FIG. 8 that are the same as those in FIG. 7, refer to related descriptions in FIG. 7. Details are not described herein again.

In this case, with reference to FIG. 3 to FIG. 8, a method for flexibly implementing information sharing between the second device and the third device by using the first device as an intermediate device when the first device, the second device, and the third device have different capabilities or support different communication technologies is described in detail. In the method, the second device and the third device may establish the first communication connection by using the shared token or the shared key. The first communication connection corresponds to the first communication technology. Compared with the second communication technology, the first communication technology has advantages such as ultra-low latency, ultra-high reliability, and precise synchronization. This helps ensure communication efficiency, security, and reliability of communication between the second device and the third device, and even communication efficiency, security, and reliability of a communication system to which the second device and the third device belong.

It should be noted that, in embodiments of this application, to ensure communication security, information located on (or from) the first device may be an encrypted ciphertext. As an intermediate device between the second device and the third device, the first device may further decrypt the obtained encrypted ciphertext by using a preset algorithm, and then implement information sharing between the second device and the third device. An encrypted ciphertext marked on the second device (or the third device) or an encrypted ciphertext from the second device (or the third device) is indicated by third information. In the method implementation described in the foregoing case 1 to case 3, that the smartphone serves as the first device to obtain the second information (or the fifth information) may include: obtaining the second information in any one of the following manners:
(1) decrypting the third information by using a locally stored key, to obtain the second information (or the fifth information);
(2) receiving a key from a server, and decrypting the third information based on the key, to obtain the second information (or the fifth information); and
(3) sending the third information to a service, and receiving, from the server, the second information (or the fifth information) obtained after the third information is decrypted.

That is, the first device, as an intermediate device between the second device and the third device, may further decrypt the encrypted ciphertext from the second device or the third device to obtain corresponding plaintext. In this way, the encrypted ciphertext is not randomly stolen. This helps improve communication security.

FIG. 9 is a schematic flowchart of establishing a Bluetooth communication connection between devices according to an embodiment of this application. The method is applicable to establishing a Bluetooth communication connection between different devices (for example, between a first device and a second device, or between a first device and a third device) in a scenario in which the second communication technology described above with reference to FIG. 2 to FIG. 8 is a Bluetooth communication technology. In FIG. 9, a smartphone may represent the first device, and a speaker may represent the second device or the third device. An example in which a Bluetooth communication connection is established based on a just work mode of the Bluetooth communication technology is used. As shown in FIG. 9, the method for establishing a Bluetooth communication connection may include the following steps.
(1) A user downloads and installs an app for managing the speaker on the smartphone.
(2) Run the app on the smartphone, register an account for managing the speaker, and log in to the account.
(3) When the speaker is powered on for the first time, after the speaker is powered on, a pairing control light (also referred to as a wake-up light) of the speaker turns into orange and blinks, a voice prompt is sent, and the speaker enters a network configuration state.
(4) The user taps a pairing control on an interface of the app, for example, "the orange light blinks, and network connection starts".
(5) The user enables a Bluetooth function on the smartphone based on the prompt of the app.
(6) The smartphone searches for an available Bluetooth device and connects to Bluetooth of the searched speaker to complete pairing.

Therefore, the smartphone may establish a Bluetooth communication connection to the second device or the third device represented by the speaker according to the foregoing steps. Based on the Bluetooth communication connection, the smartphone may perform communication interaction with the second device and the third device. Further, if required, the smartphone may send second information to the speaker based on the Bluetooth communication connection (for example, the third communication connection, the fifth communication connection, and the seventh communication connection described above) to the speaker, so that the second device and the third device establish a first communication connection based on the second information, for example, a short-range wireless communication connection specified by a SparkLink alliance.

It should be understood that the description in FIG. 9 is merely an example of steps of a method for establishing a Bluetooth communication connection between devices, but does not constitute any limitation. During actual implementation, some steps may be interchanged in execution sequence. This is not limited in embodiments of this application. In some embodiments, the Bluetooth communication connection may be established in a mode other than the just work mode. This is not limited in embodiments of this application. It may be understood that when the second communication technology is replaced with a wireless communication technology other than Bluetooth, for a link establishment process, refer to standard implementation details of a related technology. Details are not described herein.

FIG. 10 is a schematic flowchart of establishing an SLB connection between devices according to an embodiment of this application. The method is applicable to establishing an SLB connection between different devices (for example, between a first device and a second device, between a first device and a third device, or between a second device and a third device) in a scenario in which the first communication technology described above with reference to FIG. 2 to FIG. 8 is a short-range wireless communication technology specified by a SparkLink alliance. A G node may represent a communication interaction end of the SLB connection, and a T node may represent another communication interaction end of the SLB connection. Generally, the G node may represent a management node, and the T node may represent a terminal node.

For example, a second communication connection or a fourth communication connection between the first device and the second device may be the SLB connection, the G node may represent the first device, and the T node may represent the second device; or the G node may represent the second device, and the T node may represent the first device. Alternatively, for example, a sixth connection between the first device and the third device may be the SLB connection, the G node may represent the first device, and the T node may represent the third device; or the G node may represent the third device, and the T node may represent the first device. Alternatively, for example, a first communication connection between the second device and the third device may be the SLB connection, the G node may represent the second device, and the T node may represent the third device; or the G node may represent the third device, and the T node may represent the second device.

An example in which second information is a PSK is used. As shown in FIG. 10, a method for establishing an SLB connection between the second device (for example, the G node) and the third device (for example, the T node) may include the following steps.

S1001 (optional): The G node performs key agreement with the T node in a broadcast manner, to derive a shared key PSK in a subsequent process.

S1002: The T node sends an association request message to the G node. Correspondingly, the G node receives the association request message.

In an example, the association request message may carry an identification (ID, for example, a domain identifier) of the T node and related authentication parameters for identity authentication of the T node, including but not limited to a key agreement algorithm (for example, represented by KE alg) selected by the T node, a key agreement parameter (for example, represented by KEt), a security capability (sec capabilities) of the T node, and a random number (for example, represented by NONCEt). The security capability may include one or more of a key derivation function (key derivation function, KDF), an encryption algorithm, an integrity protection algorithm, and an authentication encryption algorithm supported by the T node. Details are not described herein.

The G node may process the association request message based on the related information carried in the association request message.

In an optional design, the G node may further generate, based on the related information carried in the association request message and/or a related algorithm selected by the G node itself, a related authentication parameter used for identity authentication of the G node. In an example, the related authentication parameter may include a key agreement parameter (for example, represented by KEg), a random number (for example, represented by NONCEg), a first shared key (for example, represented by K_{KE}), a second shared key (for example, represented by Kgt), an identifier of Kgt (for example, represented by Kgt ID), and an authentication parameter (for example, represented by AUTHg) of the G node.

The G node may generate a security context request message based on the obtained shared key PSK (an example of the second information) and one or more of the foregoing related authentication parameters.

In an example, the security context request message may be represented as the following multi-tuple:
(KEg, NONCEg, Kgt ID, algorithm, MIC length, AUTHg)_{MIC}.

()_{MIC} indicates that the security context request message is a message on which integrity protection processing is performed.

S1003: The G node may send a security context request message associated with the shared key to the T node. Correspondingly, the T node receives the security context request message from the G node.

In this embodiment of this application, the security context request message may be used for identity authentication of the G node. It should be understood that, in this embodiment of this application, that the security context request message may be used for identity authentication of the G node may be understood as that information included or carried in the security context request message may be used for identity authentication of the G node.

In an optional design, after successfully authenticating an identity of the G node, the T node may generate a security context response message based on the generated related authentication parameter, for example, represented as (AUTHt)_{MIC}.

S1004: The T node sends the security context response message to the G node. Correspondingly, the G node receives the security context response message from the T node.

In this embodiment of this application, the security context response message may be used for identity authentication of the T node, and the security context response message may be sent when identity authentication of the G node succeeds.

The G node may check integrity of the security context response message (or check integrity of a message included or carried in the security context response message), and verify whether AUTHt carried in the security context response message is correct. If integrity verification or AUTHt verification fails, that is, the identity authentication of the T node fails, the G node may send an association establishment failure message to the T node. If integrity verification and AUTHt verification succeed, the G node may generate, for the T node, a temporary ID (for example, a physical layer identifier) used to identify an identity of the T node.

The G node may perform identity authentication on the T node based on related information carried in the security context response message. For example, the process may be implemented by using a corresponding operation specified by the SparkLink alliance, or may be implemented in another manner. This is not specifically limited in embodiments of this application.

S1005: The G node may send an association establishment message to the T node when identity authentication of the T node succeeds. Correspondingly, the T node receives the association establishment message from the G node.

In this embodiment of this application, the association establishment message may be used to establish an SLB connection (for example, the first communication connection, the second communication connection, the fourth communication connection, or the sixth communication connection described above) to the T node, and the association establishment message may be sent when identity authentication of the T node succeeds.

In an example, the association establishment message may be represented as the following multi-tuple:
(Temporary ID, Kgt expiration, [GKc/GK], [GK ID], [Galgorithm], [GK expiration])_{MIC}.

()_{MIC} indicates that the association establishment message is a message on which integrity protection processing is performed.

When the T node receives the association establishment message, if the association establishment message is encrypted (or information included or carried in the association establishment message is encrypted), the T node may decrypt the association establishment message (or decrypt the information included or carried in the association establishment message). The T node may further check integrity of the association establishment message (or check integrity of the information included or carried in the association establishment message).

If integrity verification fails, the T node discards the message.

If integrity verification succeeds, S1006: The T node may send an association completion message to the G node. Correspondingly, the G node may receive the association completion message from the T node, where the association completion message may indicate that establishment of the first communication connection is completed.

In an example, the association completion message may be represented as follows:
(Association completion message)_{MIC}.

()_{MIC} indicates that the association completion message is a message on which integrity protection processing is performed.

The G node may process the received association completion message.

For example, if the association completion message is encrypted (or information included or carried in the association completion message is encrypted), the G node may decrypt the association completion message (or decrypt the information included or carried in the association completion message). Alternatively, the G node may check integrity of the association completion message (or check integrity of the information included or carried in the association completion message). If integrity verification fails, the message is discarded. If integrity verification succeeds, a subsequent procedure is performed. Details are not described herein.

After the SLB connection is established, communication interaction is performed between the G node and the T node.

It should be understood that the description in FIG. 10 is an example of a link establishment process in which the first communication technology is used by using an SLB connection as an example. In another embodiment, the communication connection corresponding to the first communication technology described above may alternatively be an SLE connection. A related link establishment process may be implemented with reference to a corresponding operation specified by the SparkLink alliance, or may be implemented in another manner. Details are not described herein again.

An embodiment of this application further provides a communication apparatus, configured to perform the method performed by the first device, the second device, or the third device in the foregoing method embodiments. For related features, refer to the foregoing method embodiments. Details are not described herein again.

As shown in FIG. 11, a communication apparatus 1100 may include: an obtaining unit 1101, configured to: obtain first information, where the first information indicates that a second device is associated with a third device, and obtain second information, where the second information includes shared information used for associating the second device with the third device, the second information is used to establish a first communication connection between the second device and the third device, and the first communication connection corresponds to a first communication technology; and a transceiver unit 1102, configured to send the second information to the second device and/or the third device, where any one of the first device, the second device, or the third device supports at least one communication technology, and the at least one communication technology includes the first communication technology and/or a second communication technology. For a specific implementation, refer to the method steps implemented by the first device (for example, the smartphone) in the foregoing method embodiments. Details are not described herein again.

It should be noted that in the example in FIG. 11, the obtaining unit 1101 and the transceiver unit 1102 may be a same unit or different units. This is not limited in embodiments of this application. For example, if the obtaining unit 1101 obtains the second information from a local database, the obtaining unit 1101 and the transceiver unit 1102 may be a same unit; or if the obtaining unit 1101 obtains the second information from an apparatus other than the communication apparatus 1100, the obtaining unit 1101 and the transceiver unit 1102 are different units.

As shown in FIG. 12, a communication apparatus 1200 may include: a providing unit 1201, configured to provide second information for a first device; and a communication unit 1202, configured to: receive fourth information from a third device, where the fourth information corresponds to the second information, an identification of a second device, and an identification of the third device, and establish a first communication connection to the third device based on the fourth information, where the first communication connection corresponds to a first communication technology, any one of the first device, the second device, or the third device supports at least one communication technology, and the at least one communication technology includes the first communication technology and/or a second communication technology. For a specific implementation, refer to the method steps implemented by the second device in the foregoing method embodiments. Details are not described herein again.

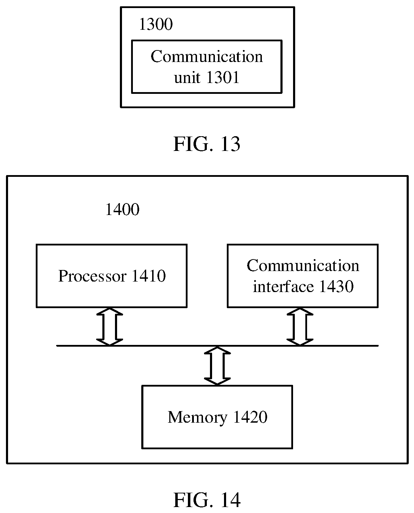

As shown in FIG. 13, a communication apparatus 1300 may include: a communication unit 1301, configured to: receive, from a first device, second information from a second device; and establish a first communication connection to the second device based on the second information, where the first communication connection corresponds to a first communication technology, any one of the first device, the second device, or a third device supports at least one communication technology, and the at least one communication technology includes the first communication technology and/or a second communication technology. For a specific implementation, refer to the method steps implemented by the third device in the foregoing method embodiments. Details are not described herein again.

It should be understood that division into units of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. For example, the processor is a general-purpose processor, for example, a central processing unit (Central Processing Unit, CPU) or a microprocessor, and the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by using a programmable logic device (programmable logic device, PLD), for example, a field programmable gate array (Field Programmable Gate Array, FPGA), the field programmable gate array may include a large quantity of logic gate circuits, and a connection relationship between the logic gate circuits is configured by using a configuration file, to implement the functions of some or all of the foregoing units. All the units of the foregoing apparatus may be implemented in the form of software invoked by the processor, or may be implemented in the form of the hardware circuit, or some of the units are implemented in the form of software invoked by the processor, and remaining units may be implemented in the form of the hardware circuit.

In embodiments of this application, the processor is a circuit having a signal processing capability. In an implementation, the processor may be a circuit having a capability of instruction reading and running, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It may be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a simple embodiment, a person skilled in the art may figure out that the communication apparatuses in the foregoing embodiments may be in the form shown in FIG. 14.

An apparatus 1400 shown in FIG. 14 includes at least one processor 1410 and a communication interface 1430. In an optional design, the apparatus 1400 may further include a memory 1420.

A specific connection medium between the processor 1410 and the memory 1420 is not limited in embodiments of this application.

In the apparatus shown in FIG. 14, when communicating with another device, the processor 1410 may perform data transmission through the communication interface 1430.

When the communication apparatus is in the form shown in FIG. 14, the processor 1410 in FIG. 14 may invoke computer-executable instructions stored in the memory 1420, so that the apparatus 1400 can perform any one of the foregoing method embodiments.

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system may alternatively directly include a memory. The memory stores a computer program or computer instructions.

In an example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Based on description used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored in a memory, so that the processor performs the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system on chip (system on chip, SoC), a CPU, a network processor (network processor, NP), a microcontroller unit (microcontroller unit, MCU), a PLD, or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code, and when the program code is run on a computer, the computer is enabled to perform the foregoing method embodiments.

In a possible implementation, an embodiment of this application provides a computer program product. When the computer program product is run on a computer, the computer is enabled to perform the foregoing method embodiments.

Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of the following claims and their equivalent technologies. In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

## Claims

1. A communication method, wherein the method comprises:
obtaining, by a first device, first information, wherein the first information indicates that a second device is associated with a third device;
obtaining, by the first device, second information, wherein the second information comprises shared information used for associating the second device with the third device, the second information is used to establish a first communication connection between the second device and the third device, and the first communication connection corresponds to a first communication technology; and
sending, by the first device, the second information to the second device and/or the third device, wherein
any one of the first device, the second device, or the third device supports at least one communication technology, and the at least one communication technology comprises the first communication technology and/or a second communication technology.

2. The method according to claim 1, wherein the obtaining, by the first device, second information comprises:
obtaining, by the first device, the second information according to an information reading technology, wherein the information reading technology comprises any one of the following: an image capturing technology, an optical scanning technology, a radio frequency reading technology, or a magnetic label reading technology.

3. The method according to claim 1, wherein the obtaining, by the first device, second information comprises:
obtaining, by the first device, the second information by using an input apparatus of the first device, wherein the input apparatus comprises at least one of a human machine interaction interface HMI and a voice input apparatus.

4. The method according to claim 2 or 3, wherein
the second information is marked on the second device.

5. The method according to any one of claims 2 to 4, wherein
the second device supports the first communication technology but does not support the second communication technology; and the first device supports the second communication technology but does not support the first communication technology.

6. The method according to claim 1, wherein the obtaining, by the first device, second information comprises:
randomly generating, by the first device, the second information.

7. The method according to claim 3 or 6, wherein the sending, by the first device, the second information to the second device and/or the third device comprises:
sending, by the first device, the second information to the second device, wherein
when a communication technology supported by the first device and the second device comprises the first communication technology, the sending, by the first device, the second information to the second device comprises:
sending, by the first device, the second information to the second device based on a second communication connection to the second device, wherein the second communication connection corresponds to the first communication technology; or
when a communication technology supported by the first device and the second device comprises the second communication technology, the sending, by the first device, the second information to the second device comprises:
sending, by the first device, the second information to the second device based on a third communication connection to the second device, wherein the third communication connection corresponds to the second communication technology.

8. The method according to claim 1, wherein a communication technology supported by the first device and the second device comprises the first communication technology, and the obtaining, by the first device, second information comprises:
receiving, by the first device, the second information from the second device based on a fourth communication connection to the second device, wherein the fourth communication connection corresponds to the first communication technology; or
a communication technology supported by the first device and the second device comprises the second communication technology, and the obtaining, by the first device, second information comprises:
receiving, by the first device, the second information from the second device based on a fifth communication connection to the second device, wherein the fifth communication connection corresponds to the second communication technology.

9. The method according to any one of claims 1 to 8, wherein the sending, by the first device, the second information to the second device and/or the third device comprises:
sending, by the first device, the second information to the third device, wherein
when a communication technology supported by the first device and the third device comprises the first communication technology, the sending, by the first device, the second information to the third device comprises:
sending, by the first device, the second information to the third device based on a sixth communication connection to the third device, wherein the sixth communication connection corresponds to the first communication technology; or
when a communication technology supported by the first device and the third device comprises the second communication technology, the sending, by the first device, the second information to the third device comprises:
sending, by the first device, the second information to the third device based on a seventh communication connection to the third device, wherein the seventh communication connection corresponds to the second communication technology.

10. The method according to any one of claims 1 to 9, wherein the obtaining, by a first device, first information comprises:
obtaining, by the first device, the first information by using an input apparatus of the first device, wherein the input apparatus comprises at least one of an HMI and a voice input apparatus.

11. The method according to any one of claims 1 to 10, wherein the second information comprises a shared key PSK or a token.

12. The method according to any one of claims 1 to 11, wherein the second information is plaintext of third information, the third information is an encrypted ciphertext, and the obtaining, by the first device, second information comprises:
obtaining, by the first device, the second information in any one of the following manners:
decrypting the third information by using a locally stored key, to obtain the second information;
receiving a key from a server, and decrypting the third information based on the key, to obtain the second information; or
sending the third information to a service, and receiving, from the server, the second information obtained after the third information is decrypted.

13. The method according to any one of claims 1 to 12, wherein the first communication technology comprises a SparkLink short-range wireless communication technology; and the second communication technology comprises a Bluetooth communication technology.

14. The method according to any one of claims 1 to 13, wherein the sending, by the first device, the second information to the second device and/or the third device comprises:
sending, by the first device, an identification of the third device and the shared information to the second device; and/or
sending, by the first device, an identification of the second device and the shared information to the third device.

15. A communication method, wherein the method comprises:
providing, by a second device, second information for a first device;
receiving, by the second device, fourth information from a third device, wherein the fourth information corresponds to the second information, an identification of the second device, and an identification of the third device; and
establishing, by the second device, a first communication connection to the third device based on the fourth information, wherein the first communication connection corresponds to a first communication technology, wherein
any one of the first device, the second device, or the third device supports at least one communication technology, and the at least one communication technology comprises the first communication technology and/or a second communication technology.

16. The method according to claim 15, wherein the second information is marked on the second device; and
the second information supports being identified in any one of the following manners: an image capturing technology, an optical scanning technology, a radio frequency reading technology, or a magnetic label reading technology; or the second information supports being input to the first device by using an input apparatus of the first device, and the input apparatus comprises at least one of an HMI and a voice input apparatus.

17. The method according to claim 16, wherein the second device supports the first communication technology but does not support the second communication technology; and the first device supports the second communication technology but does not support the first communication technology.

18. The method according to claim 15, wherein before the providing, by a second device, second information for a first device, the method further comprises:
randomly generating, by the second device, the second information.

19. The method according to any one of claims 15 to 18, wherein the providing, by a second device, second information for a first device comprises:
sending, by the second device, the second information to the first device based on a second communication connection to the first device, wherein the second communication connection corresponds to the first communication technology; or
sending, by the second device, the second information to the first device based on a third communication connection to the first device, wherein the third communication connection corresponds to the second communication technology.

20. The method according to any one of claims 15 to 19, wherein the second information comprises a shared key PSK or a token.

21. The method according to any one of claims 15 to 20, wherein the second information further comprises identity information of the second device.

22. The method according to any one of claims 15 to 21, wherein the first communication technology comprises a SparkLink short-range wireless communication technology; and the second communication technology comprises a Bluetooth communication technology.

23. A communication method, wherein the method comprises:
receiving, by a third device from a first device, second information from a second device; and
establishing, by the third device, a first communication connection to the second device based on the second information, wherein the first communication connection corresponds to a first communication technology, wherein
any one of the first device, the second device, or the third device supports at least one communication technology, and the at least one communication technology comprises the first communication technology and/or a second communication technology.

24. The method according to claim 23, wherein
the second information is marked on the second device, wherein the second information supports being identified in any one of the following manners: an image capturing technology, an optical scanning technology, a radio frequency reading technology, or a magnetic label reading technology; or the second information supports being input to the first device by using an input apparatus of the first device, and the input apparatus comprises at least one of an HMI and a voice input apparatus.

25. The method according to claim 23 or 24, wherein a communication technology supported by the third device and the first device comprises the first communication technology, and the receiving, by a third device from a first device, second information from a second device comprises:
receiving, by the third device from the first device based on a sixth communication connection to the first device, the second information from the second device, wherein the sixth communication connection corresponds to the first communication technology; or
a communication technology supported by the third device and the first device comprises the second communication technology, and the receiving, by a third device from a first device, second information from a second device comprises:
receiving, by the third device from the first device based on a seventh communication connection to the first device, the second information from the second device, wherein the seventh communication connection corresponds to the second communication technology.

26. The method according to any one of claims 23 to 25, wherein the second information comprises a shared key PSK or a token.

27. The method according to any one of claims 23 to 26, further comprising:
receiving, by the third device from the first device, an identification of the second device.

28. The method according to any one of claims 23 to 27, wherein the first communication technology comprises a SparkLink short-range wireless communication technology; and the second communication technology comprises a Bluetooth communication technology.

29. A communication apparatus, used in a first device, wherein the apparatus comprises:
an obtaining unit, configured to: obtain first information, wherein the first information indicates that a second device is associated with a third device, and obtain second information, wherein the second information comprises shared information used for associating the second device with the third device, the second information is used to establish a first communication connection between the second device and the third device, and the first communication connection corresponds to a first communication technology; and
a transceiver unit, configured to send the second information to the second device and/or the third device, wherein
any one of the first device, the second device, or the third device supports at least one communication technology, and the at least one communication technology comprises the first communication technology and/or a second communication technology.

30. A communication apparatus, used in a second device, wherein the apparatus comprises:
a providing unit, configured to provide second information for a first device; and
a communication unit, configured to: receive fourth information from a third device, wherein the fourth information corresponds to the second information, an identification of the second device, and an identification of the third device; and establish a first communication connection to the third device based on the fourth information, wherein the first communication connection corresponds to a first communication technology, wherein
any one of the first device, the second device, or the third device supports at least one communication technology, and the at least one communication technology comprises the first communication technology and/or a second communication technology.

31. A communication apparatus, used in a third device, wherein the apparatus comprises:
a communication unit, configured to: receive, from a first device, second information from a second device; and establish a first communication connection to the second device based on the second information, wherein the first communication connection corresponds to a first communication technology, wherein
any one of the first device, the second device, or the third device supports at least one communication technology, and the at least one communication technology comprises the first communication technology and/or a second communication technology.

32. A communication apparatus, comprising at least one processor and an interface circuit, wherein the interface circuit is configured to provide data or code instructions for the at least one processor, and the at least one processor is configured to implement, through a logic circuit or by executing the code instructions, the method according to any one of claims 1 to 14, the method according to any one of claims 15 to 22, or the method according to any one of claims 23 to 28.

33. A communication system, comprising a communication apparatus configured to implement the method according to any one of claims 1 to 14, a communication apparatus configured to implement the method according to any one of claims 15 to 22, and a communication apparatus configured to implement the method according to any one of claims 23 to 28.

34. A computer-readable storage medium, wherein the computer-readable medium stores program code, and when the program code is run on a computer, the computer is enabled to perform the method according to any one of claims 1 to 14; or when the program code is run on a computer, the computer is enabled to perform the method according to any one of claims 15 to 22; or when the program code is run on a computer, the computer is enabled to perform the method according to any one of claims 23 to 28.

35. A computer program product, wherein when the computer program product is run on a computer, the computer is enabled to perform the method according to any one of claims 1 to 14, the method according to any one of claims 15 to 22, or the method according to any one of claims 23 to 28.

36. A terminal device, comprising a unit configured to implement the method according to any one of claims 1 to 14, a unit configured to implement the method according to any one of claims 15 to 22, or a unit configured to implement the method according to any one of claims 23 to 28.
